# EUROPEAN PATENT SPECIFICATION

(11) **EP 3 355 670 B1**
(45) Date of publication and mention of the grant of the patent: **13.05.2020**
(21) Application number: 16778537.7
(22) Date of filing: 19.09.2016
(51) Int. Cl.: A01B 69/00, A01B 79/00, A01D 41/127

(54) **USER INTERFACE FOR MOBILE MACHINES**
BENUTZEROBERFLÄCHE FÜR MOBILE MASCHINEN
INTERFACE UTILISATEUR POUR MACHINES MOBILES

(30) Priority: 30.09.2015 US 201562235282 P
(43) Date of publication of application: 08.08.2018
(73) Proprietor: AGCO Corporation, Hesston, Kansas 67062 (US)
(72) Inventor: TENTINGER, Nathan, Sioux City, Iowa 51108 (US); BUHLER, Timothy, Hesston, Kansas 67062 (US)
(74) Representative: AGCO Intellectual Property Department
(86) International application number: PCT/US2016/052499
(87) International publication number: WO 2017/058553

(56) References cited:
- EP-A1- 1 674 324
- EP-A1- 2 752 730
- DE-A1-102015 102 675
- DE-U1- 20 013 646
- DE-U1-202005 002 485
- US-A- 5 721 679
- US-A1- 2006 178 823

## Description

### BACKGROUND OF THE INVENTION

### Field of Invention

Embodiments of the present invention relate to user interfaces for mobile machines. More particularly, embodiments of the present invention relate to advanced user interfaces and user interface systems for mobile machines that automatically adapt to the machine's operating environment and provide natural, intuitive interaction between the machine and the machine's operator.

### Description of Related Art

Mobile machines, such as mobile machines used in the agriculture and construction industries, are increasingly larger, more complex and more automated. Many of such machines have multiple auxiliary functions. Tractors used in the agriculture and construction industries, for example, may include front and rear linkage systems, multiple power take offs, and multiple hydraulic couplers for interfacing an onboard hydraulic system with an external attachment. Such auxiliary functions include operator controls inside the cabin and, sometimes, additional controls outside the operator cabin. These machines typically include multiple embedded computing devices to help manage machine operation, and may collect information from an array of sensors located throughout the machine and use the collected information to optimize machine performance and provide information about the machine to the operator through a user interface.

It is common for multiple machines to work cooperatively within a relatively small geographic area, such as a group of construction machines doing groundwork at a worksite or a fleet of combine harvesters and grain carts harvesting a field and transporting harvested grain to a grain storage facility. Using multiple machines at a single site can increase productivity but also presents challenges. The work of the machines must be coordinated, for example, and care must be taken to avoid machine-to-machine and machine-to-person collisions and other accidents.

The above section provides background information related to the present disclosure which is not necessarily prior art. A mobile machine in accordance with the preamble of claim 1 is known from the document EP-A1-1 674 324.

### OVERVIEW OF THE INVENTION

A mobile machine in accordance with a first embodiment of the invention comprises an operator cabin, a seat in the operator cabin and one or more computing devices for determining a location of an item of interest external to the operator cabin, selecting one of a plurality of display locations inside the operator cabin, the selected one of the plurality of display locations being between the seat and the location of the item of interest, and presenting a user interface element at the selected one of the plurality of display locations, the user interface element being associated with the item of interest.

These and other important aspects of the present invention are described more fully in the detailed description below. The invention is not limited to the particular methods and systems described herein. Other embodiments may be used and/or changes to the described embodiments may be made without departing from the scope of the claims that follow the detailed description.

### BRIEF DESCRIPTION OF THE DRAWINGS

Embodiments of the present invention are described in detail below with reference to the attached drawing figures, wherein:
Fig. 1 is a perspective view of a tractor incorporating principles of the present invention.
Fig. 2 is a perspective view of a bulldozer incorporating principles of the present invention.
Fig. 3 is a first perspective view of an inside of an operator cabin of the tractor of Fig. 1.
Fig. 4 is a second perspective view of the inside of the operator cabin of Fig. 3.
Fig. 5 is a third perspective view of the inside of the operator cabin of Fig. 3.
Fig. 6 is a plan view of the tractor of Fig. 1.
Fig. 7 is a block diagram of an exemplary communications and control system for use with a mobile machine in accordance with embodiments of the present invention.
Fig. 8 is a block diagram of an exemplary user interface system for use with a mobile machine in accordance with embodiments of the present invention.
Fig. 9 is a perspective view of an inside of an operator cabin of a mobile machine including a plurality of sensors for detecting the presence, state or behavior of an operator in the cabin.
Fig. 10 is a plan view of the tractor of Fig. 1 illustrating first exemplary locations of the sensors of Fig. 9.
Fig. 11 is a plan view of the tractor of Fig. 1 illustrating second exemplary locations of the sensors of Fig. 9.
Fig. 12 is a perspective view of a lower portion of an operator cabin of a mobile machine illustrating a sensor for detecting the state of an operator's foot or leg.
Fig. 13 is a perspective view of a lower portion of an operator cabin of a mobile machine illustrating a sensor for detecting the state of an operator's foot or leg.
Figs. 14A-D present perspective views of an inside of an operator cabin of a mobile machine, including a heads-up display projector on a ceiling of the cabin and heads-up display images projected on various surfaces of the cabin.
Fig. 15 is a diagram of an exemplary group of objects communicatively coupled via a communications network.
Fig. 16 is a flowchart depicting various steps involved in an exemplary method of selecting or receiving a user interface element.
Figs. 17A-B illustrated a perspective view of a combine harvester from inside the operator cabin of a tractor and a user interface element associated with the combine harvester presented on a heads-up display.
Figs. 18A-C illustrate the user interface element of Figs. 17A-B.
Figs. 19A-C illustrate a group of objects in an operating environment of a mobile machine, and a subset of the group of objects for which user interface elements are presented in the mobile machine.
Fig. 20 is a flowchart depicting various steps involved in an exemplary method of placing a user interface element in an operator cabin of a mobile machine.
Fig. 21 is a flowchart depicting various steps involved in an exemplary method of determining the position of a machine attachment relative to the machine.
Figs. 22A-C illustrate a first implementation of the method of Fig. 21.
Figs. 23A-C illustrate a second implementation of the method of Fig. 21.
Fig. 24 is a perspective view of an inside of an operator cabin of the tractor of Fig. 1, illustrating a user interface element associated with the tractor's engine placed to correspond to an engine compartment of the tractor from the operator's point of view.
Fig. 25 is a perspective view of an inside of an operator cabin of the tractor of Fig. 1, illustrating a user interface element associated with a tire of the tractor placed to correspond to a location of the tire from the operator's point of view.
Fig. 26 is a plan view of the tractor of Fig. 1 and an independent object in an operating environment of the tractor, illustrating an exemplary method of identifying a side of the tractor that is between an operator's seat and the independent obj ect.
Fig. 27 is a flowchart depicting various steps involved in an exemplary method of implementing a user interface configured to detect operator movements as inputs.
Fig. 28 is a perspective view of an inside of an operator cabin of the tractor of Fig. 1, illustrating the cabin with a reduced number of physical controls.

The drawing figures do not limit the present invention to the specific embodiments disclosed and described herein. The drawings are not necessarily to scale, emphasis instead being placed upon clearly illustrating the principles of the invention.

### DETAILED DESCRIPTION OF EXEMPLARY EMBODIMENTS

The following detailed description of embodiments of the invention references the accompanying drawings. The embodiments are intended to describe aspects of the invention in sufficient detail to enable those skilled in the art to practice the invention. Other embodiments can be utilized and changes can be made without departing from the scope of the claims. The following description is, therefore, not to be taken in a limiting sense.

In this description, references to "one embodiment", "an embodiment", or "embodiments" mean that the feature or features being referred to are included in at least one embodiment of the technology. Separate references to "one embodiment", "an embodiment", or "embodiments" in this description do not necessarily refer to the same embodiment and are also not mutually exclusive unless so stated and/or except as will be readily apparent to those skilled in the art from the description. For example, a feature, structure, act, etcetera described in one embodiment may also be included in other embodiments, but is not necessarily included. Thus, the present technology can include a variety of combinations and/or integrations of the embodiments described herein.

Embodiments of the present invention relate to improved user interfaces and user interface systems for mobile machines that make a greater amount of information available to machine operators in a manner that is natural, intuitive and easy to use. More specifically, embodiments of the invention relate to user interface systems capable of automatically detecting aspects of the machine's operating environment and automatically optimize the user interface for the operating environment. The operating environment may include the state of external and independent objects within the same region as the mobile machine as well as the state of an operator inside the mobile machine. Such optimization may occur in real time to reflect changes in the machine's operating environment as they occur.

Embodiments of the present invention also relate to user interface systems for mobile machines that facilitate user input and interaction by enabling various methods of user input including traditional buttons, switches or touchscreen inputs, as well as more natural forms of user input such as gestures and sound recognition. Gesture and sound recognition enable hands-free control of the mobile machine, enabling operators to interact with the machine without any mechanical input devices.

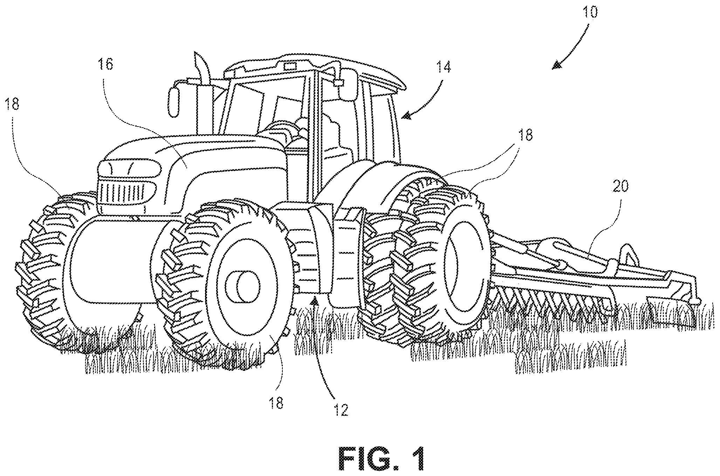

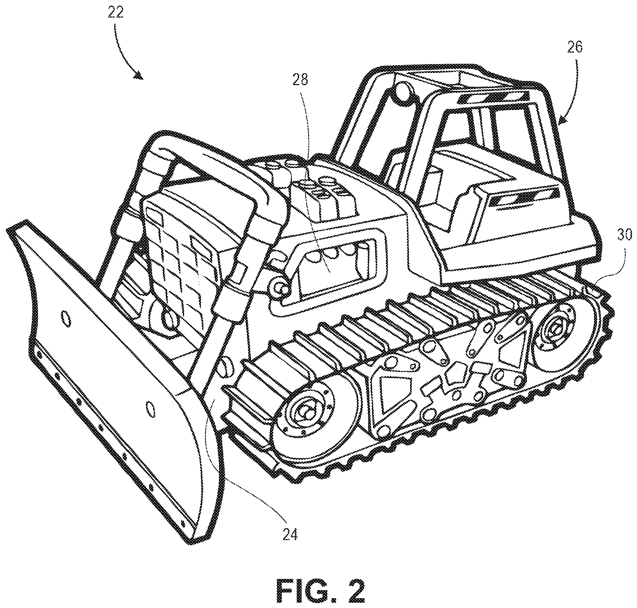

Turning now to the drawing figures, and initially Figs. 1 and 2, exemplary mobile machines incorporating principles of the present invention are illustrated. Figure 1 illustrates an exemplary tractor 10 that may be used in the construction and/or agriculture industries. The tractor 10 includes a chassis 12, an operator cabin 14, an engine 16 and a plurality of wheels 18 or tracks driven by the engine 16 or by other motive components such as hydraulic motors. The tractor 10 may include one or more attachments, such as the illustrated implement 20. An attachment may be coupled to the tractor 10 such that it is pulled by, pushed by or mounted on the tractor using a drawbar, front linkage system, rear linkage system or other mechanical coupling mechanism.

Figure 2 illustrates an exemplary bulldozer 22 that may be used in the agriculture and/or construction industries. The bulldozer 22 includes a chassis 24, an operator cabin 26, an engine 28 and a pair of tracks 30 driven by the engine 28. While not illustrated, an attachment may be coupled with the bulldozer 22 by way of, for example, a drawbar or linkage system on the back of the bulldozer 22. The bulldozer 22 will not be described in further detail with the understanding that the operator cabin 26 may be similar to the operator cabin 14 of the tractor 10 described in further detail below and that principles of the invention described herein may be applied to the bulldozer 22 in the same or a similar manner as described for the tractor 10. It will be appreciated that the tractor 10 and the bulldozer 22 are exemplary in nature and that the present invention may be used with virtually any mobile machine including machines designed for use in the agriculture, construction and forestry industries. By way of example and not limitation, such machines may include wheeled tractors, tracked tractors, backhoes, skid steers, bulldozers, scrapers, combine harvesters, windrowers, application machines such as sprayers and particulate spreaders, articulated trucks, compactors, excavators, payloaders and graders. Reference will be made herein to the "machine" or the "mobile machine" to indicate generically any mobile machine in which the present invention may be implemented.

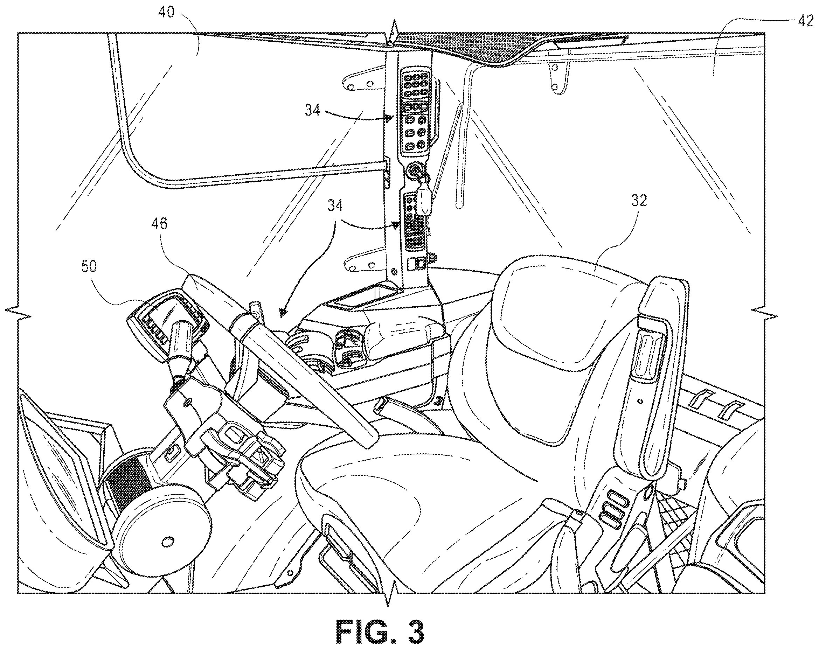

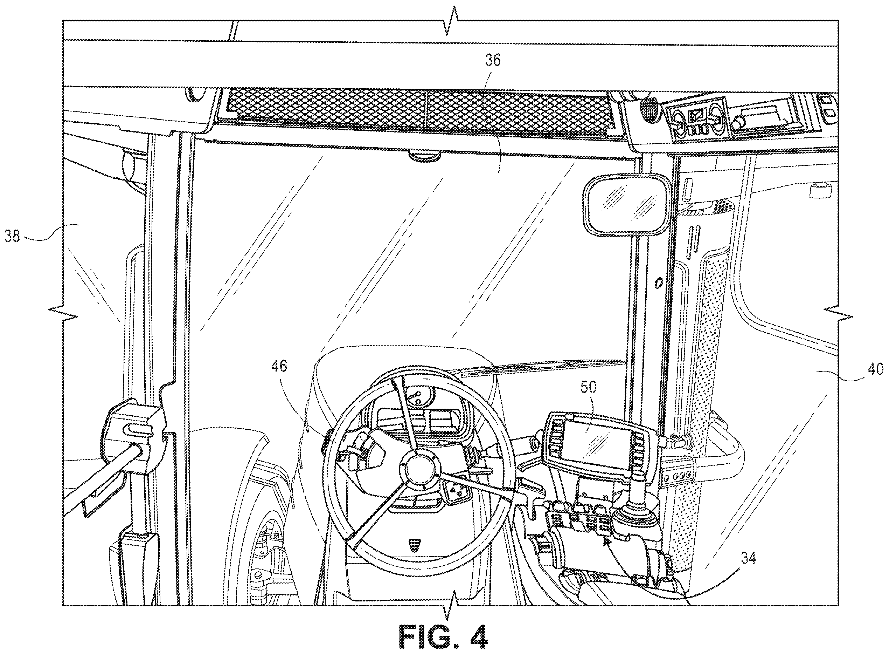

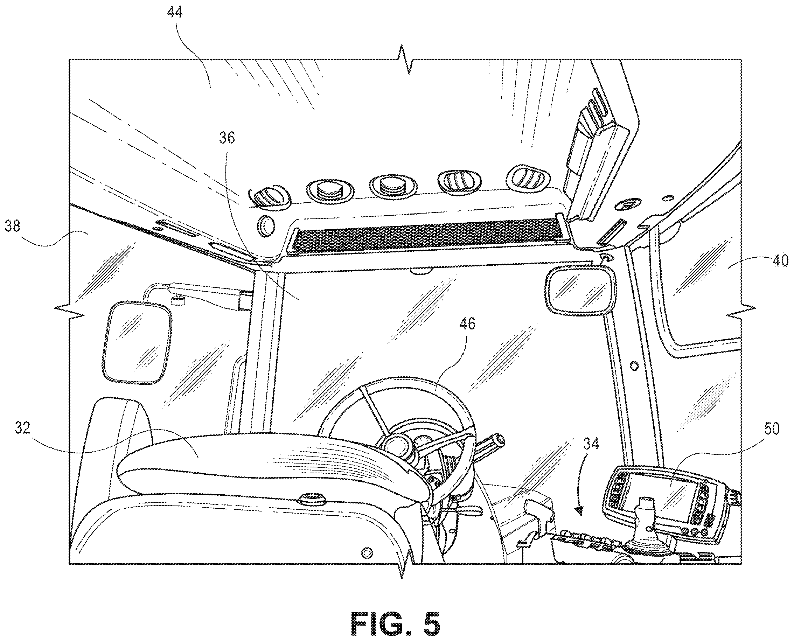

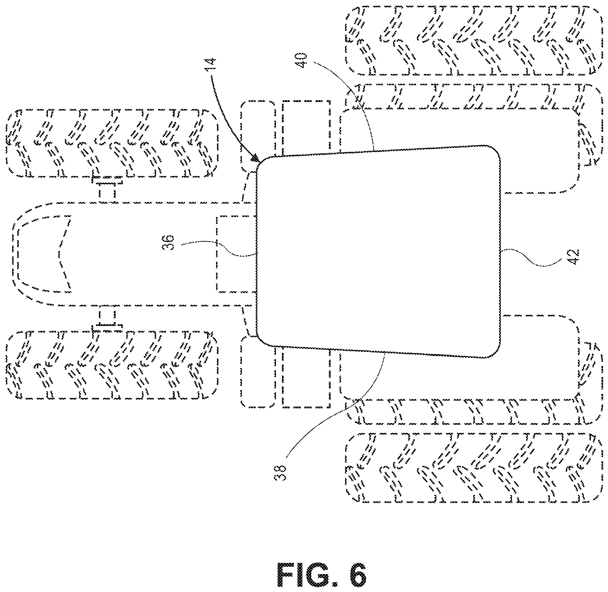

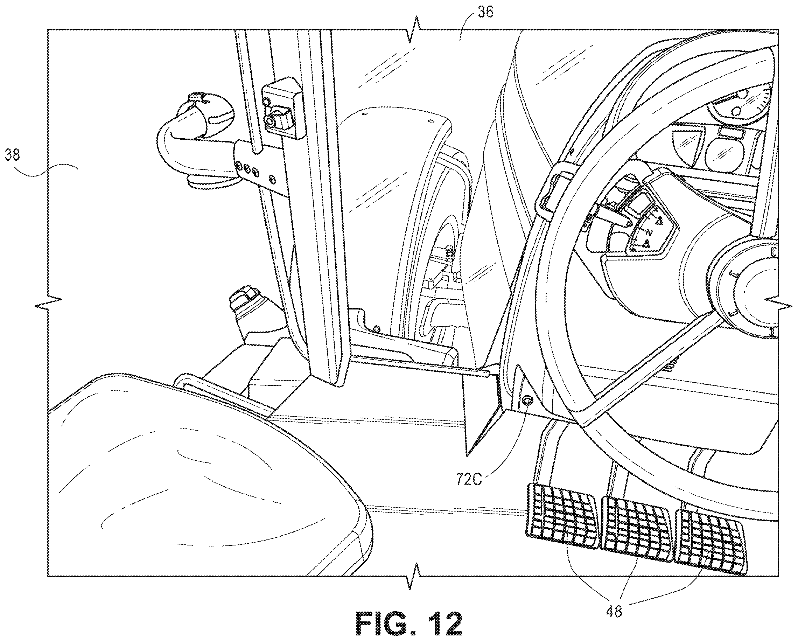

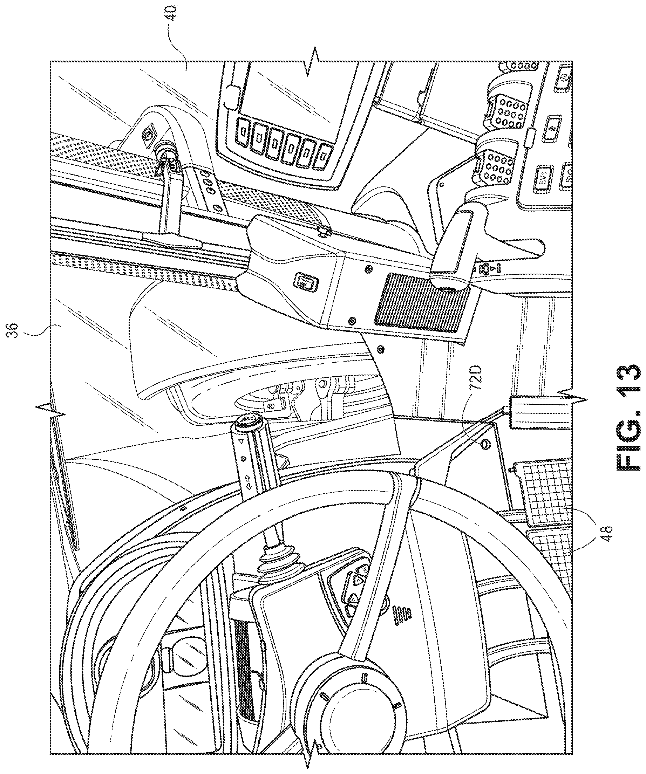

With particular reference now to Figs. 3-6, the operator cabin 14 associated with the tractor 10 is illustrated in greater detail, wherein Figs. 3-5 illustrate various aspects of the interior of the operator cabin 14 including an operator seat 32, a plurality of physical operator controls 34 located at various locations within the cabin 14, a plurality of windows 36, 38, 40 and 42 partially or completely surrounding the operator seat 32, and a ceiling 44. The windows may include a front window 36, a left side window 38, a right side window 40 and a rear window 42. When reference is made herein to a "side" of the operator cabin 14 or a "side window" of the operator cabin 14 without specifying front, rear, right or left, it means any side including front, rear, right, left, floor or ceiling. The operator controls 34 may include a steering wheel 46, foot pedals 48 (see, for example, figures 12 and 13), one or more display components 50 and a plurality of buttons, switches, knobs, levers or other physical input devices in one or more locations around the operator cabin 14.

Reference will be made herein to items or objects external to the operator cabin 14. Such items or objects may include independent objects, attachments and machine components. An independent object is an object that is not physically attached to or part of the mobile machine. Independent objects include other mobile machines, attachments coupled with other mobile machines, and fixed structures such as barns, grain storage bins, grain dryers, grain silos, road markings, signs, bridges, railroad crossings, fence lines, power lines, creeks, rivers and geographic markers. An attachment is a machine or device that is mechanically coupled with the mobile machine and is intended to be coupled with, and decoupled from, the mobile machine as part of the ordinary and normal operation of the machine. Examples of attachments include compacting or tilling implements pulled or pushed by a tractor or bulldozer, combine headers, windrower headers, loaders attached to tractors, mowers attached to tractors, and balers attached to tractors. Machine components include parts of the mobile machine that are not decoupled from the machine during ordinary and normal operation of the machine. Machine components include wheels, tires and tracks, engines, and components of hydraulic systems such as hydraulic motors.

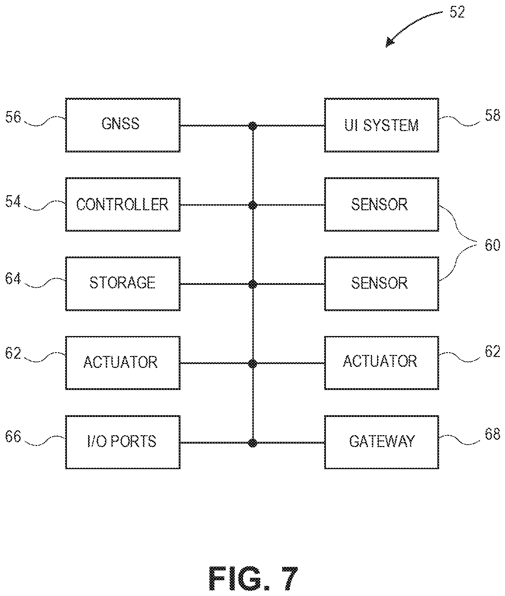

Aspects of the present invention may be enabled by a communications and control system associated with the mobile machine. An exemplary communications and control system 52 is illustrated in Fig. 7 and broadly includes a controller 54, a position determining system 56, a user interface system 58, one or more sensors 60, one or more actuators 52, one or more storage components 64, one or more input/out ports 66 and a communications gateway 68.

The position determining system 56 may include a global navigation satellite system (GNSS) receiver, such as a device configured to receive signals from one or more positioning systems such as the United States' global positioning system (GPS), the European GALILEO system and/or the Russian GLONASS system, and to determine a location of the mobile machine using the received signals. The position determining system 56 may incorporate GNSS enhancements such as Differential Global Positioning System (DGPS) or Real Time Kinematic (RTK) that increase the accuracy of GNSS systems.

The sensors 60 may be associated with any of various components or functions of the mobile machine including, for example, various elements of the engine, transmission(s), hydraulic system, electrical system, power take off(s) and linkage systems. The sensors 60 may collect information about the operation of the machine such as engine speed, engine temperature, wheel position, hydraulic fluid pressure and hydraulic fluid temperature. The sensors 60 may also collect information about attachments coupled with the machine as well as the machine's environment such as ambient temperature. As explained below in greater detail, one or more of the sensors 60 may be configured and/or placed to determine when an attachment is coupled with the machine.

The actuators 62 are configured and placed to drive certain functions of the machine including, for example, steering when an automated guidance function is engaged, manipulating a hydraulic system or a linkage system such as a three-point hitch linkage system. The actuators 62 may take virtually any form but are generally configured to receive control signals or other inputs from the controller 54 (or other component of the system 52) and to generate a mechanical movement or action in response to the control signals or instructions. By way of example, the sensors 60 and actuators 62 may be used in automated steering of a machine wherein the sensors 60 detect a current position or state of steered wheels or tracks and the actuators 62 drive steering action or operation of the wheels or tracks. In another example, the sensors 60 collect data relating to the operation of the machine and store the data in the storage component 64, communicate the data to a remote computing device via the gateway, or both.

The controller 54 includes one or more integrated circuits programmed or configured to implement the functions described herein. By way of example the controller 54 may be a digital controller and may include one or more general purpose microprocessors or microcontrollers, programmable logic devices, or application specific integrated circuits. The controller 54 may include multiple computing components placed in various different locations on the machine. The controller 54 may also include one or more discrete and/or analog circuit components operating in conjunction with the one or more integrated circuits or computing components. Furthermore, the controller 54 may include or have access to one or more memory elements operable to store executable instructions, data, or both. The storage component 64 stores data and preferably includes a non-volatile storage medium such as optic, magnetic or solid state semiconductor technology.

It will be appreciated that, for simplicity, certain elements and components of the system 52 have been omitted from the present discussion and from the drawing of Fig. 7. A power source or power connector is also associated with the system 52, for example, but is conventional in nature and, therefore, is not discussed herein.

In some embodiments, all of the components of the system 52 are contained on or in a host machine. The present invention is not so limited, however, and in other embodiments one or more of the components of the system 52 may be external to the machine. In another embodiment, for example, some of the components of the system 52 are contained on or in the machine while other components of the system 52 are contained on or in an implement associated with the machine. In that embodiment, the components associated with the machine and the components associated with the implement may communicate via wired or wireless communications according to a local area network such as, for example, a controller area network. The system 52 may be part of a communications and control system conforming to the ISO 11783 (also referred to as "ISOBUS") standard. In yet another exemplary embodiment, one or more components of the system 52 may be located remotely from the machine and any implements associated with the machine. In that embodiment, the system 52 may include wireless communications components (e.g., the communications gateway 68) for enabling the machine to communicate with a remote computer, computer network or system.

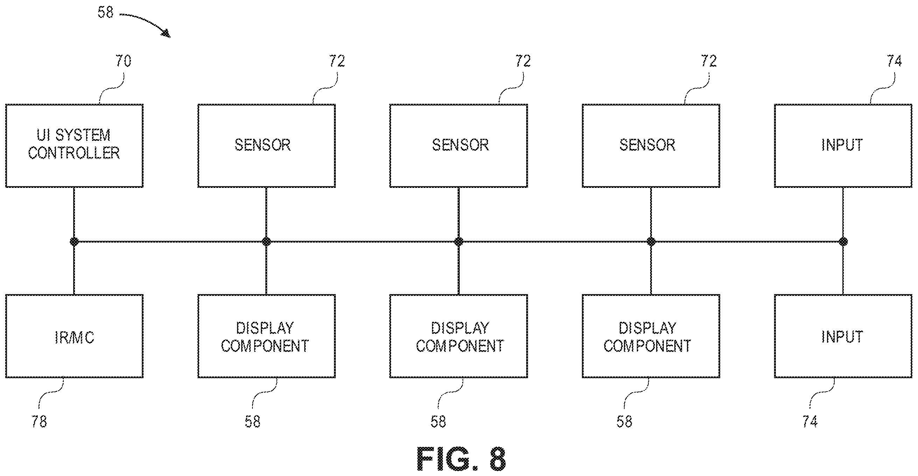

An exemplary implementation of the user interface system 58 is illustrated in Fig. 8. The exemplary user interface system 58 broadly includes a user interface system controller 70, a plurality of user interface sensors 72, a plurality of inputs 74, a plurality of display components 76, and an image recognition/motion controller (IR/MC) component 78. The user interface system controller 70 may be a controller (or multiple controllers) dedicated to managing operation of the user interface system 58 as described herein. The user interface system controller 70 may include one or more integrated circuits programmed or configured to implement the functions of the user interface system 58. By way of example the user interface system controller 70 may be a digital controller and may include one or more general purpose microprocessors or microcontrollers, programmable logic devices, or application specific integrated circuits. The controller 70 may include multiple computing components placed in various locations on the machine and may share one or more controllers with another machine system, such as the controller 54 described above.

The sensors 72 are adapted to detect operator presence, state or behavior such as operator movement, contact, body position and sounds including spoken and non-spoken sounds (e.g., hand claps or finger snaps). Optical or infrared sensors, such as image capture devices, may be used to detect movement and body position. Microphones, piezoelectric sensors and/or other sensors may be used to detect sounds.

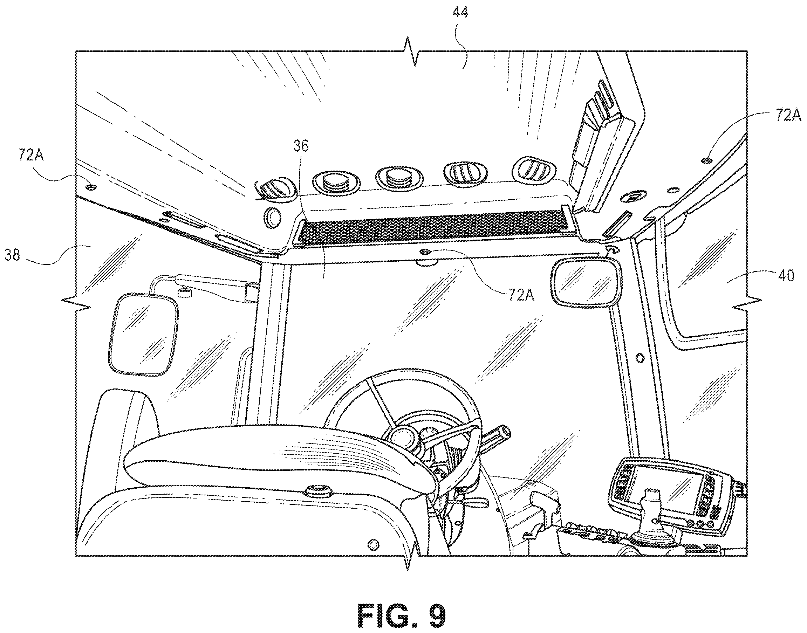

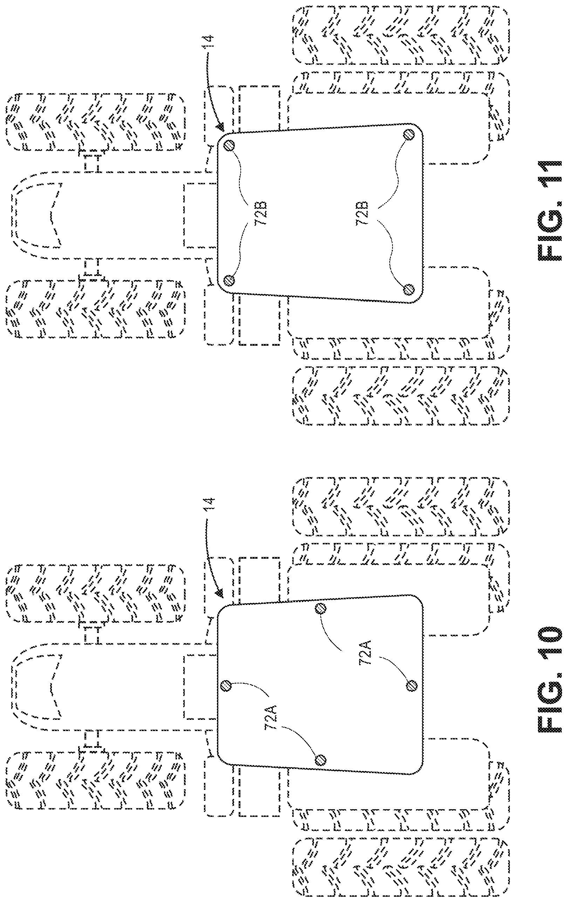

The sensors 72 are preferably placed in or near the operator cabin 14 to best detect operator presence, state or behavior. Optical sensors for detecting operator position and movement may be placed at positions in or near the ceiling 44 of the operator cabin 14 to maximize unobstructed view of the operator from the sensors 72. One exemplary configuration is illustrated in Figs. 9 and 10 wherein sensors 72A are placed at or near a middle of each side of the cabin 14 and at or near the cabin ceiling 44. An alternative configuration is illustrated in Fig. 11 wherein sensors 72B are placed in or near corners of the operator cabin 14 rather than in the middle of each side. The use of multiple sensors may be advantageous, for example, to detect operator position and movement regardless of where the operator is located within the cabin 14 and regardless of his or her position or posture. The placement schemes of the sensors 72 described and illustrated herein are merely exemplary in nature, and it will be appreciated by those skilled in the art that the sensors may be placed at any of various, equally effective locations within the operator cabin 14.

One or more of the sensors 72 may also be placed to detect movement of the operator's feet and/or legs. A sensor 72C is illustrated in Fig. 12 placed in a lower portion of the cabin 14 near a left foot or leg of the operator and another sensor 72D is illustrated in Fig. 13 placed in a lower portion of the cabin 14 near a right foot or leg of the operator.

The inputs 74 may include physical input components for receiving instructions or other input from a user. Such physical input components may correspond to the operator controls 34 illustrated in the drawings and discussed above, and may include buttons, switches, levers, dials, and microphones. The inputs 74 may further include one or more touchscreen displays capable of presenting visual representations of information or data and receiving instructions or input from the user via a single display surface.

The one or more display components 76 may include one or more display consoles, one or more heads-up display projectors/surfaces, or a combination thereof. In some embodiments of the invention the system 58 is configured to automatically place user interface elements at optimal or preferred locations, as explained below in greater detail. To enable that functionality display components 76 are placed at two or more locations within the operator cabin 14 such that the user interface system 58 may select one of a plurality of display locations for placing a user interface element. By way of example, multiple display consoles may be used, one or more placed on each side of the operator cabin 14 or in each of multiple corners of the operator cabin 14. According to another implementation, a heads-up display system may be used with the cabin windows serving as display surfaces.

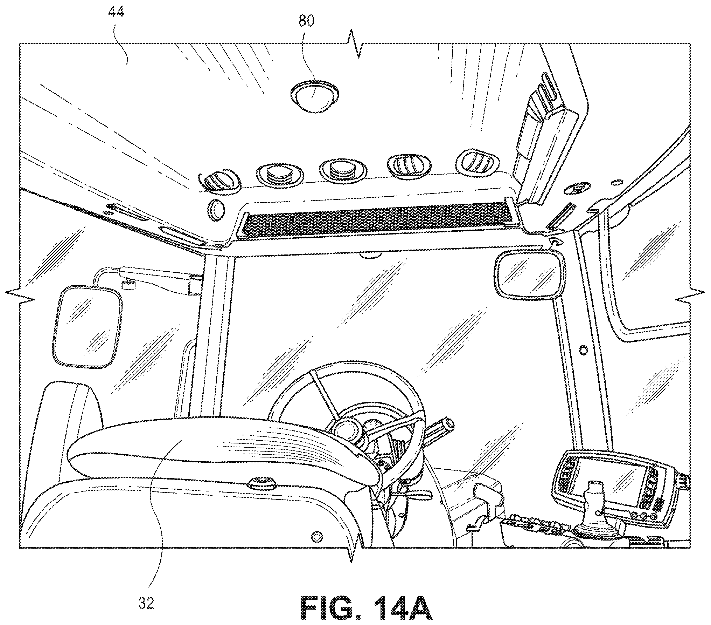

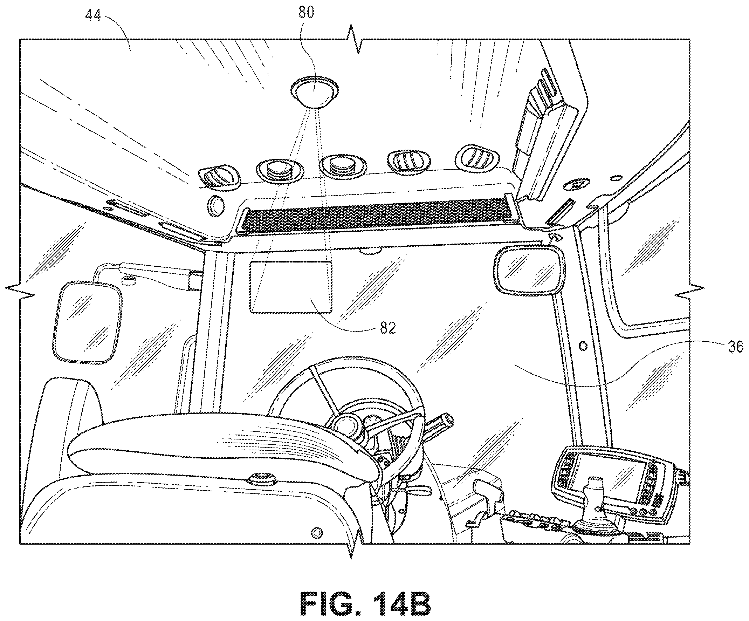

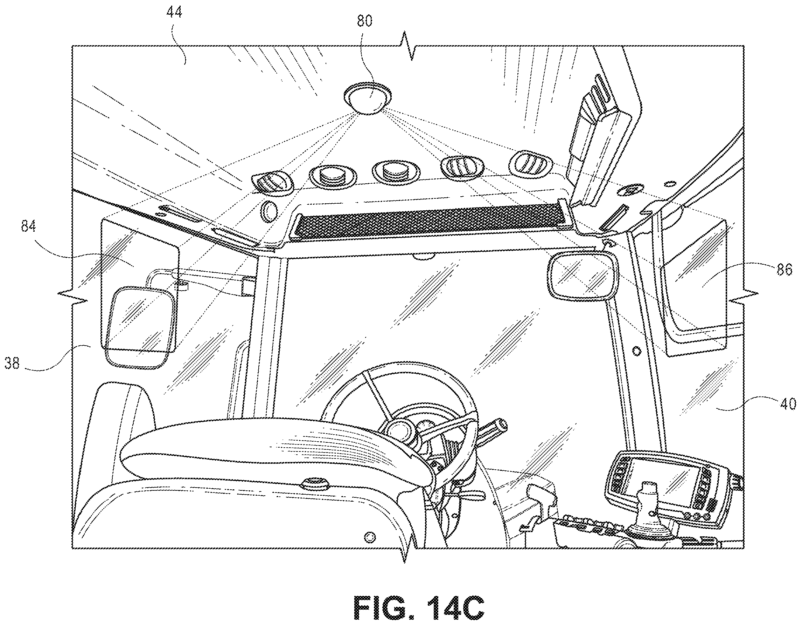

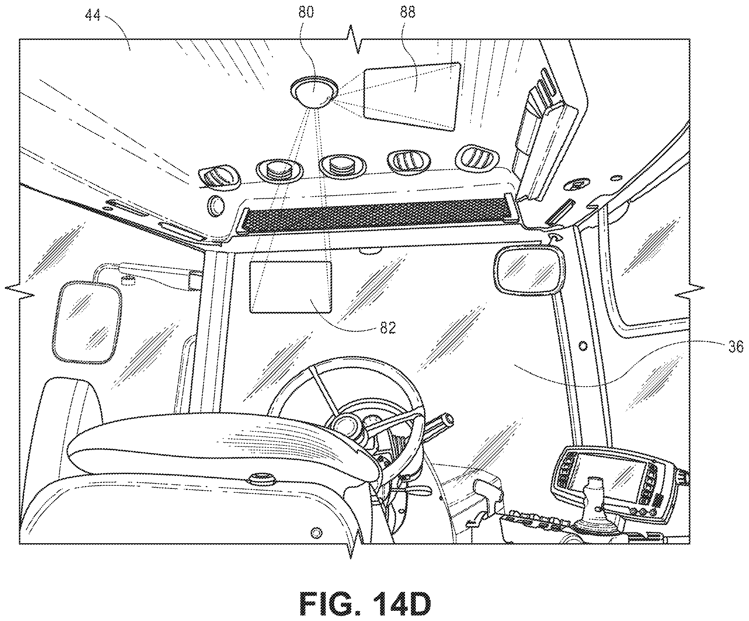

An exemplary projector 80 is illustrated in Fig. 14A mounted at the center of the ceiling 44 of the operator cabin 14. From that position the projector 80 can project images on all or most of the cabin windows, thus enabling a heads-up display system that nearly or completely surrounds the operator when the operator is in the operator seat 32. This concept is illustrated in Figs. 14B and 14C, wherein a user interface element 82 is projected on the front window 36 of the operator cabin 14 in Fig. 14B and user interface elements 84, 86 are projected on the left window 38 and the right window 40 of the operator cabin 14 in Fig. 14C. The projector 80 may simultaneously project multiple user interface elements on any window or surface, or across multiple windows or surfaces, including the rear window 42. Surfaces other than windows may be used as heads-up display surfaces, including the ceiling 44, cabin corner posts, and floor. By way of example and as illustrated in Fig. 14D, the projector 80 may simultaneously project a first user interface element 82 onto the front window 36 and a second user interface element 88 onto the ceiling 44 of the operator cabin 14.

The projector 80 illustrated in Fig. 14 is exemplary in nature and other methods of implementing a heads-up display are within the ambit of the present invention. By way of example, rather than a single projector for use with multiple display surfaces the user interface system 58 may include multiple projectors each placed at a different location within the operator cabin 14 and each configured for use with a different display surface. The latter implementation may be advantageous in environments with insufficient space for a single projector to illuminate multiple surfaces. Yet another example is a heads-up display system that does not use a projector at all, such as where the technology enabling the heads-up display is integrated into the window (and/or other surface) material or into a material layer proximate the window material.

The IR/MC module 78 is configured to handle data processing tasks associated with image recognition and motion control, including gesture recognition. The IR/MC module 78 may also include hardware and/or software for voice and sound recognition. Generally, the IR/MC module 78 will work in conjunction with the sensors 72 and/or user interface system controller 70 to process, for example, image data collected by the sensors 72. Because image recognition and motion control can include complex and resource-intensive data processing it may be advantageous to include in the user interface system 58 dedicated and specialized hardware, software or both to offload that data processing from the user interface system controller 70 or other general purpose controllers.

Gestures recognized may be hand location, hand orientation, hand posture, hand movement, arm location, arm orientation, arm posture, arm movement, finger location, finger orientation, finger posture, finger movement, leg location, leg orientation, leg posture, leg movement, foot location, foot orientation, foot posture, foot movement, head location, head orientation, head movement and facial expressions. The gesture recognition functions may be relatively simple, such as only a few simple gestures, or may be more complex, involving many gestures involving various body parts.

Gesture recognition technology is known in the art and may be implemented using any of various techniques. A first method of implementing gesture recognition involves the use of depth-aware cameras such as structured light or time-of-flight cameras to generate a depth-map and create or estimate a three-dimensional representation of what is captured by the cameras. Another method involves using two two-dimensional cameras with a known special relationship and approximating a three-dimensional representation of images captured by the cameras. Yet another technique involves the use of controllers attached to parts of the human body (e.g., gloves, bracelets, rings) that detect position, movement or both. The IR/MC module 78 may include specialized mathematical algorithms for identifying human gestures using data captured by the sensors 72. The present invention may use known image and gesture recognition technology and techniques, including those discussed herein or others.

The mobile machine may be operated as part of a group of objects including machines, fixed or stationary structures, or other objects that are interconnected via a communications network. This networked group of objects may share data to enable machine coordination and object awareness, among other things. Data may be shared, for example, to coordinate work and avoid collisions.

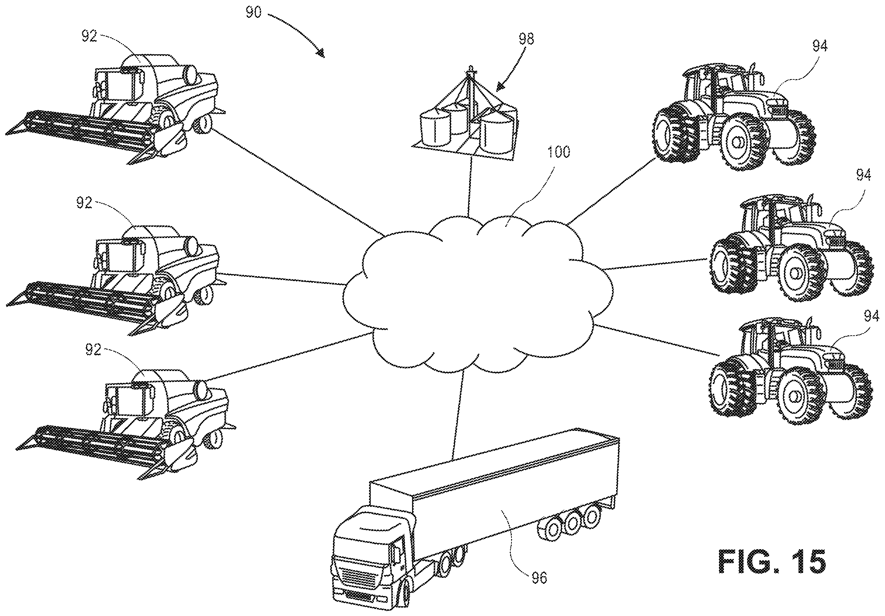

In the construction industry the networked group of objects may include tractors, bulldozers, scrapers, articulated trucks, compactors, excavators, graders, cranes, surveying equipment or combinations thereof. In one exemplary scenario a group of networked bulldozers and scrapers are moving and working soil to prepare a construction site. In the agriculture industry the networked group of objects may include tractors, combine harvesters, windrowers, sprayers, particulate spreaders, grain storage bins, grain driers and barns. In one exemplary scenario illustrated in Fig. 15 a networked group of objects 90 includes a plurality of combine harvesters 92, a plurality of tractors 94, one or more grain trucks 96 and a grain storage system 98 comprising one or more grain bins and/or grain driers, all involved in a harvesting operation and interconnected via a communications network 100. Each of the tractors 94 may be similar or identical to the tractor 10 described above and illustrated in Fig. 1. While note illustrated, the tractors 94 may include attachments such as grain carts.

Each of the objects may be equipped with a communications gateway similar to the gateway 68 described above to enable wired or wireless communications. Various types of networks may be used to enable communications and data transfer between the objects including direct machine-to-machine communication, a mesh network, or a wide area network such as where each of the objects is connected to the Internet and communicates with each of the other objects via the Internet. Multiple networking schemes may be employed for a single group of objects, such as where a first object communicates with a second object via the Internet but communicates with a third object via direct wireless communications.

In some embodiments of the invention, the user interface system 58 is operable to automatically select and present computer-generated or computer-enabled user interface elements that are associated with objects within the machine's operating environment. This feature may optimize display space and machine operation by presenting only those user interface elements that are needed by the operator at the time they are needed.

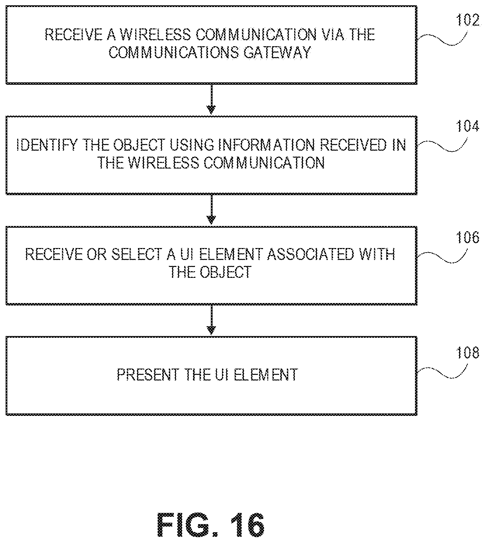

Figure 16 illustrates an exemplary method of selecting user interface elements. The machine receives a wireless communication via the communications gateway 68 as depicted in block 102. The machine's communications and control system 52 identifies the object using information received in the wireless communication, as depicted in block 104. The system 52 receives or selects a user interface element associated with the independent object, as depicted in block 106. The user interface system 58 presents the user interface element to the operator, as depicted in block 108.

The wireless communication received via the communications gateway 68 may include information about an independent object. The wireless communication may originate from the independent object, such as where a first mobile machine sends a wireless communication directly to a second mobile machine. Alternatively, the wireless communication may not originate from the independent object, such as where the wireless communication originates from another mobile machine but includes information about an attachment coupled with the other mobile machine, or where the wireless communication originates from another mobile machine but includes information about a fixed structure that is in communication with the other mobile machine. If multiple objects are communicatively interconnected via a mesh network a communication may originate from a first object and be received and retransmitted by one or more other intermediate objects before being finally received by the mobile machine.

Once the machine has received the communication the communications and control system 52 identifies the object using information received in the wireless communication that was received via the communications gateway 68. The communication may include, for example, an identifier with information about the object. If the object is a mobile machine, the communication may include such information as the make and model of the machine, a specific machine identifier such as a machine name assigned by the operator, the name of a person operating the machine, as well as information about the machine's operating state.

Once the communications and control system has identified the object, the user interface system 58 selects a user interface element associated with the object. Data relating to a plurality of user interface elements may be stored, for example, in the storage component 64 associated with the system 52, and may define an appearance, behavior, or both of each of the user interface elements. A user interface element may be associated with the object if it presents information about the object, allows an operator to interact with the object, or both. By way of example, a user interface element may present information about an object if the object is a grain storage bin and the user interface element includes an indication of an amount or type of grain in the storage bin, a temperature of the bin, a level of moisture in the bin, or a combination thereof. In that scenario, the user interface element may allow the machine operator to interact with the grain storage bin if the machine operator can activate or deactivate a ventilation system associated with the grain storage bin via the user interface element in the mobile machine. This functionality may be enabled by the communications and control system 52 communicating a command to the grain storage bin in a wireless communication sent via the communications gateway 68.

Rather than select a user interface element from the storage component 64, the user interface system 70 may receive data defining the user interface element in the communication received via the communications gateway 68. Each object in the network may store data defining its own user interface element and communicate that data to each other machine in the network. The user interface element may also be stored in a remote location not associated with the machine or the object, wherein the machine retrieves the user interface element from the remote location via the communications gateway 68.

Once data associated with the user interface element is selected or received, the user interface system 58 presents the user interface element via one or more of the display components 76. A user interface element presented via a display component may be a "soft" element meaning that it is generated by software and may be presented, for example, on a display console or on a heads-up display. These user interface elements may also be dynamic in that the system 58 automatically adds, removes, revises and/or updates or otherwise modifies user interface elements during operation of the mobile machine, as explained below in greater detail.

Each user interface element may be presented so that its location is associated with or corresponds to the location of the independent object, such as a side of the machine that is generally between the operator's seat 32 and the location of the independent object. Placement of user interface elements is discussed in greater detail below. Alternatively, the system 58 may place the user interface element in a location indicated by the machine operator, and the operator may change the location of any user interface element at any time. If the user interface element is presented on a touchscreen or a heads-up display surface, for example, the operator may "drag" the user interface element from one location to another by placing a finger in contact with the display surface at or near the location of the user interface element and dragging the finger along the display surface to the desired location of the user interface element. Other methods of selecting a user interface location, such as selecting a user interface element layout template, are within the ambit of the present invention.

The user interface system 58 may determine a system or controllable component of the mobile machine associated with the independent object, and the user interface element may enable an operator to manipulate the system or controllable component of the mobile machine associated with the independent object. The system or controllable component may be an auxiliary system such as a power take off, a linkage such as a three-point hitch, or a hydraulic coupler. By way of example, if the mobile machine is a combine harvester and the independent object is a grain truck or a grain cart, the system associated with the independent object may be a grain unload auger of the combine harvester and the user interface element may enable an operator to deploy, activate, deactivate and stow the unload auger by interacting with the user interface element.

The user interface element may be dynamic and continuously updated to reflect newly-received information from or about the independent object. By way of example, the user interface system controller 70 may receive additional information about the independent object in wireless communications received via the communications gateway 68. Such communications may occur periodically such as every five minutes, every minute, every thirty seconds or every fifteen seconds, or may occur continuously or substantially continuously. Alternatively, the communications may occur only as needed, such as only when new or additional information about the independent object is available. Thus, if the independent object is initiating the communications, it may detect when a status relating to the information has changed and initiate a communication only when the status has changed.

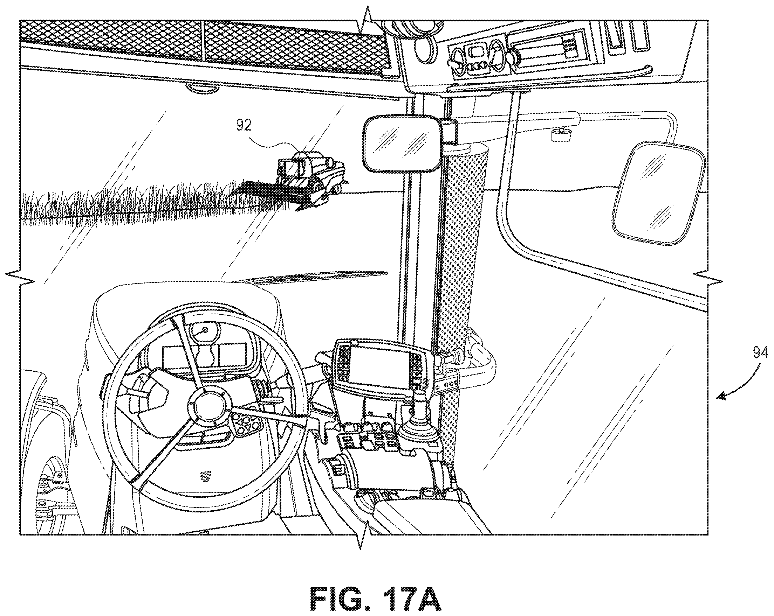

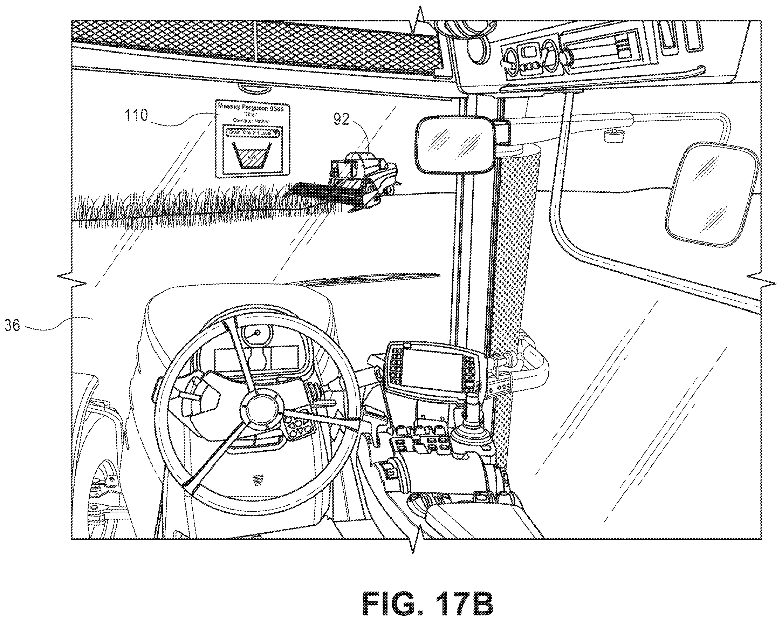

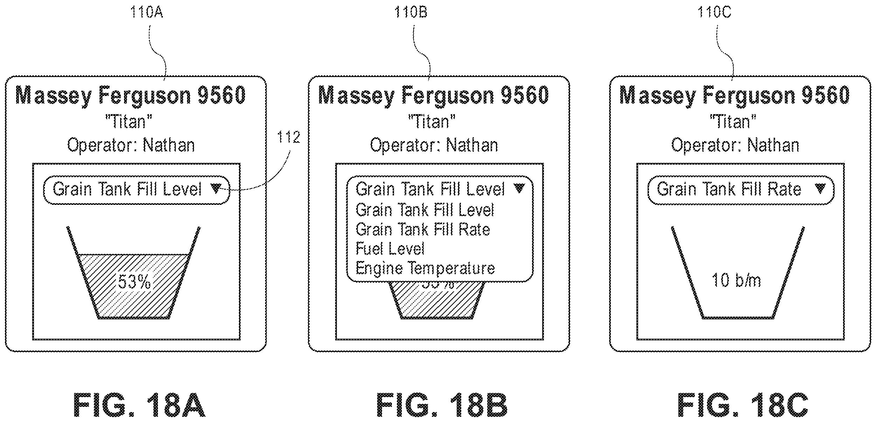

With reference to Figs. 17 and 18, in one exemplary scenario, the independent object is a combine harvester 92 and the machine is a tractor 94, such as where the tractor pulling a grain cart for receiving grain from the combine harvester 92 and transporting the grain to the grain storage system 98. Figure 17A illustrates the tractor operator's view of the combine harvester 92 in the field. The communications and control system 52 of the tractor 94 may receive a wireless communication from the combine harvester 92 and use information from the communication to present a user interface element 110 relating to the combine harvester 92 on a display surface of the tractor 94, as illustrated in Fig. 17B. In this exemplary scenario, the user interface element 110 includes a fill level of the combine harvester's grain tank as illustrated in Fig. 18A. The tractor operator uses that information to determine whether the combine harvester 92 is ready to be unloaded.

The user interface element 110 illustrated in Fig. 17B is presented on the front window 36 as part of a heads-up display system and is placed to be proximate, or overlapping, the combine harvester 92 from the operator's point of view. This configuration may be convenient for the tractor operator in that the user interface element 110 is in the same field of view as the combine harvester 92, enabling the operator to view the user interface element 110 without diverting his or her gaze from the combine harvester 92. Furthermore, if there are multiple user interface elements each corresponding to a different object, placing each user interface element proximate its associated object makes it easier for the operator to determine which element corresponds to which object. How the system 58 may determine optimal placement of the user interface element is described in greater detail below. The user interface element 110 may be placed near the object (as illustrated), directly over or in line with the object, or may be placed at a different location entirely, such as in a corner of a window. The operator may select which placement scheme he or she desires to use by submitting an input to the system 58.

The machine operator may interact with the user interface element to request additional information from or about the independent object. With continued reference to the exemplary scenario set forth in the preceding paragraphs, the tractor operator may expand a drop-down menu in the user interface element 110 by pressing or indicating the down arrow 112, as illustrated in Figs. 18A and 18B. The operator may then select another option such as "Grain Tank Fill Rate," wherein the system 58 responds by revising the user interface element 110 to include an indicia of the grain tank fill rate of the combine harvester, as illustrated in Fig. 18C. Collecting the additional information may involve the communications and control system 52 of the tractor 94 communicating a wireless signal via the communications gateway 68 to the combine harvester 92 requesting the additional information and the combine harvester 92 communicating a wireless signal to the tractor 94 with the additional information. If the display component includes a touchscreen surface, the operator may interact with the user interface element by touching the touchscreen surface. If the display component includes a heads-up display surface the operator may also interact with the element by touching the surface or placing his or her finger or a pointing device in close proximity to the display surface. In a heads-up display system sensors such as optical or infrared sensors may detect the presence of the operator's finger or pointing device. Other methods of interacting with the user interface element are within the ambit of the present invention, including physical input devices such as knobs, switches, buttons and keypads.

Other exemplary scenarios may include user interface elements that indicate the reservoir fill level of a sprayer, the fill level of a fuel tank, or engine operating parameters such as temperature. Virtually any information relating to the object, including a machine operating state, may be included in the user interface element.

The machine may also be configured to communicate information about itself or an attachment associated with itself to the independent object, such as in a wireless communication via the communications gateway 68. That information may include a machine identifier, data defining a user interface element, machine state or operating parameters. The information may be communicating automatically or upon request by the independent object. The machine may collect information relating to an attachment associated with the machine and communicate the information about the attachment to the independent object.

Referring again to the exemplary scenario set forth in the preceding paragraphs and illustrated in Fig. 17, if the machine is the tractor 94 pulling a grain cart and the independent object is the combine harvester 92, the tractor 94 may communicate information to the combine harvester 92 to enable the harvester to identify the tractor 94 and generate a user interface element associated with the tractor 94. If the tractor 94 is pulling a grain cart, the operator of the combine harvester 92 may desire to know the fill level of the grain cart as well as whether the tractor 94 is leaving the field, entering the field or waiting to be filled. Thus, if multiple machines are in a work site or region, communication between the machines may enable each of the machines to present user interface elements associated with each of the other machines. This would enable the operator of each machine to see information about the other machines and, in some circumstances manipulate the other machines.

In some embodiments of the invention, the machine only presents user interface elements relating to objects that are communicating directly with the mobile machine. As additional objects begin communicating with the machine the user interface system 58 adds a user interface element for each of the additional objects. As objects in communication with the mobile machine stop communicating with the machine (for example, they are shut down or are out of communications range) the user interface system 58 removes any user interface elements associated with those objects. In this way, the user interface system 58 automatically presents user interface elements only for objects that are presently in communication with the machine. In this manner the user interface system 58 may automatically manage the user interface by including only desirable or relevant user interface elements.

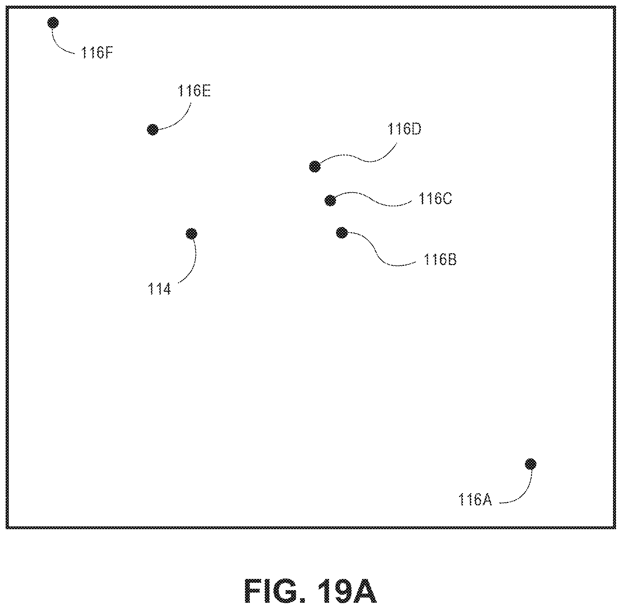

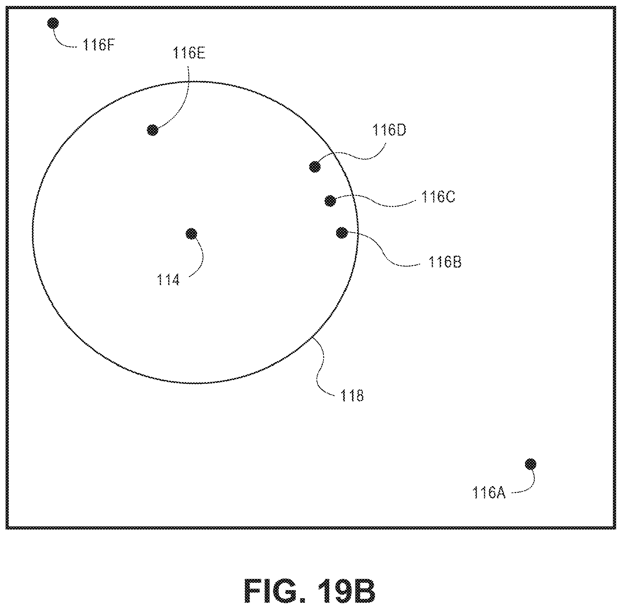

With reference to Figs. 19A and 19B, another method of managing user interface elements involves presenting user interface elements only for objects that are within a predetermined range of the mobile machine. As illustrated in Fig. 19A, a mobile machine 114 may be in communication with six independent objects 116A-F. A predetermined range from the machine 114, illustrated by the boundary 118 in Fig. 19B, includes only four of those objects (116B-E). Thus, the user interface system 58 may identify the four objects within the range and present only user interface elements associated with those four objects. The system 58 may determine the range of each object by comparing a location of the object with a location of the machine as determined by the position determining component 56. The location of the object may be determined, for example, by requesting the object's location in a communication via the communications gateway 68.

The user interface system 58 may continuously and automatically determine the distance to each of the objects 116 and revise the user interface to include user interface elements relating only to those objects that are within the desired range of the machine. Thus, as some of the objects 116 move into the range 118, the system 58 adds user interface elements associated with those objects, and as some of the objects 116 move out of the range 118 the system 58 removes user interface elements associated with those objects. This function may be particularly desirable, for example, where the objects are interconnected via a mesh network such that some objects in the network are located a considerable distance from other objects, or where the objects are networked via the Internet (or other wide area network) that is not limited by geographic distance. The predetermined range may be fifty meters, one hundred meters, one hundred and fifty meters, two hundred meters, three hundred meters, four hundred meters or five hundred meters, and the machine operator may adjust the predetermined range at any time during operation of the machine.

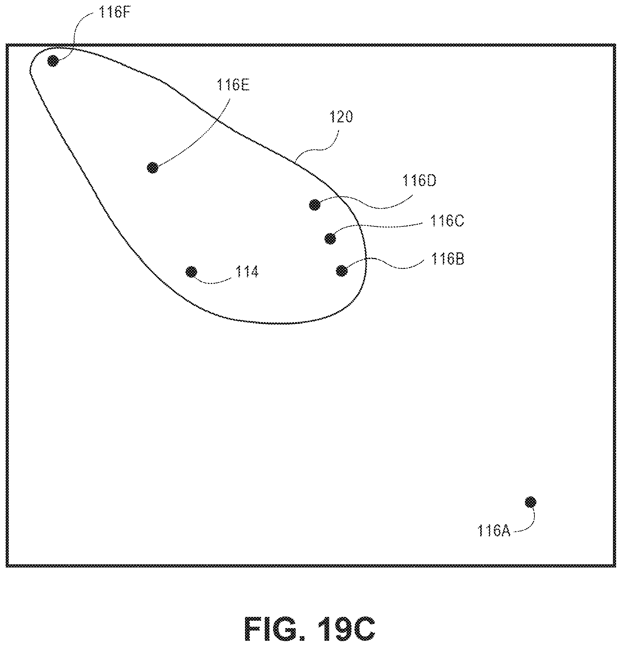

Another method of managing user interface elements involves presenting user interface elements only for objects that are within a geographic boundary. The operator may define the geographic boundary by, for example, drawing the boundary on a map that is presented via the user interface system 58. Figure 19C illustrates the same machine 114 and group of objects 116 as the scenario illustrated in Figs. 19A and 19B, but with a boundary 120 defined by an operator and used by the system 58 to present user interface elements associated with the objects within the boundary 120. The geographic area defined by the boundary 120 may correspond to field or land boundaries, may be arbitrarily drawn by the user, or may be arbitrarily tied to a grain storage bin being filled with grain from the field where the machine is operating.

In some embodiments of the invention, the system determines when an implement or other attachment is being used with the machine and automatically presents a user interface element associated with the attachment. When the attachment is no longer being used with the machine the system may automatically remove the user interface element associated with the attachment. This aspect of the invention helps to minimize the number of user interface elements presented via the user interface by only presenting user interface elements for those machine systems that are being used. These user interface elements have traditionally existed as physical input mechanisms such as dials, buttons, switches and levers that, cumulatively occupied a large portion of the operator's area in the operator cabin. By dynamically adding and removing user interface elements on an as-needed basis, the user interface may be much less cluttered.

By way of example, if the machine has a hydraulic system with multiple couplers for interfacing external systems or devices with the on-board hydraulic system, no user interface elements associated with the hydraulic couplers need be present if nothing is connected to any of the couplers. Similarly, if four of eight hydraulic couplers are in use, there may need to be only four user interface elements corresponding to the four couplers in use rather than for all eight couplers. Similarly, if the machine includes a front or rear linkage system, such as a three-point hitch system, and nothing is attached to the linkage system, there is no need for a user interface element for controlling operation of the three-point hitch. Similarly, if the machine includes a front or rear power take off system and nothing is attached to the power take off drive, there is no need for a user interface element for controlling operation of the power take off system.

In one embodiment of the invention, this functionality is enabled when the system automatically determines when an attachment is coupled with the machine, identifies a controllable component of the machine associated with the attachment and, after identifying the controllable component, presents a user interface element via the user interface for enabling the operator to manipulate the controllable component.

The system may automatically determine when an attachment is coupled with the machine or may receive an input from a user indicating that the attachment is coupled with the machine. The system may use internal or external sensors to determine when an attachment is coupled with the machine. A controllable component of the machine is a device or system built into the machine which can be controlled by user input or manipulation. Examples of controllable components include an onboard hydraulic system coupled with an external hydraulic system, a front linkage, a rear linkage and a power take off. To identify a controllable component associated with the attachment, the system may use the sensor data to identify the controllable component or may reference stored data, such as a look-up table.

For simplicity embodiments of the invention have been described and illustrated with reference to a single user interface element corresponding to a single independent object. The invention, however, is not so limited. The machine network may include multiple machines and each machine may include user interface elements for each of the other machines, such that if a work area includes a total of eight machines each machine may have up to seven user interface elements associated with other machines.

In some embodiments of the invention, the user interface system 58 is operable to automatically and intelligently place the computer-generated user interface elements in strategic locations for easy and convenient use by the machine operator.

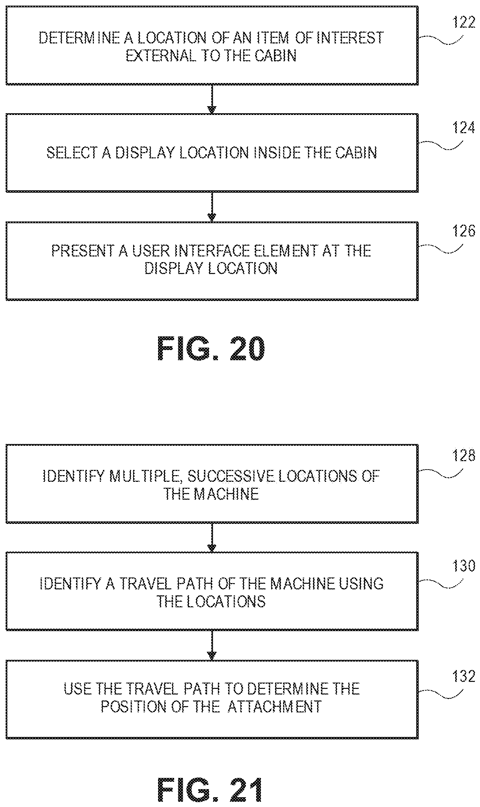

With reference to Fig. 20, an exemplary method is illustrated that includes determining a location of an item of interest external to the operator cabin, as depicted in block 122; selecting one of a plurality of display locations inside the operator cabin, as depicted in block 124; and presenting a user interface element at the selected one of the plurality of display locations, as depicted in block 126. The user interface element is associated with the item of interest.

The item of interest may be an independent object or an attachment coupled with the mobile machine, both of which are described above. If the item of interest is an independent object, the machine may determine the location of the item of interest by receiving a communication via the communications gateway 68 that includes location information for the item of interest. As explained above, the communication may be received directly from the item of interest, from another object in the region and/or through a wide area network. If the item of interest is another mobile machine, that mobile machine may collect location information from an onboard position determining component and communicate that location information to the machine. If the item of interest is a stationary structure, such as a grain storage bin, the item's location may be stored locally in the machine, such as in the storage component 64.

The item of interest may also be an attachment, such as an implement pulled by or mounted on the mobile machine. One exemplary attachment is the implement 20 illustrated in Fig. 1 coupled with the tractor 10. The system 58 may determine that an attachment is coupled with the machine in any of various ways, including an internal or external sensor configured to detect the presence of the attachment, electronic communications from the attachment via a wired or wireless communications medium, or input from an operator of the mobile machine indicating the presence and type of the attachment. The system may also determine attachment state information for use in placing user interface elements. The attachment state information may include the position of the attachment relative to the operator cabin, such as the position of a three-point hitch linkage system of a tractor, the position of a header of a combine harvester or the position of a blade on a bulldozer.

If the attachment is pivotally coupled with the mobile machine via a drawbar, determining the position of the attachment relative to the machine may present challenges because the position of the attachment may not be related to the state of any on-board machine system such as a hydraulic system or linkage system. One exemplary method of determining a position of such an attachment is illustrated in Fig. 21. If the attachment is pivotally coupled with the machine via a drawbar such that the attachment trails the mobile machine, determining a position of the attachment relative to the operator cabin may involve tracking the location of the machine over time using the position determining component to identify multiple, successive locations of the machine, as depicted in block 128; identifying a travel path of the machine using the successive locations, as depicted in block 130; and, using the travel path of the machine determine the position of the attachment relative to the operator cabin 14 of the machine, as depicted in block 132. The system 58 may also use attachment trailing information, such as the location of wheels supporting the attachment, to help determine the position of the attachment relative to the operator cabin 14. The attachment trailing information may also include the size and shape of the attachment including portions of the attachment that connect the attachment to the machine. It may also include information about the attachment that would affect the attachment's movement as it is pulled by the machine, such as articulation, if any.

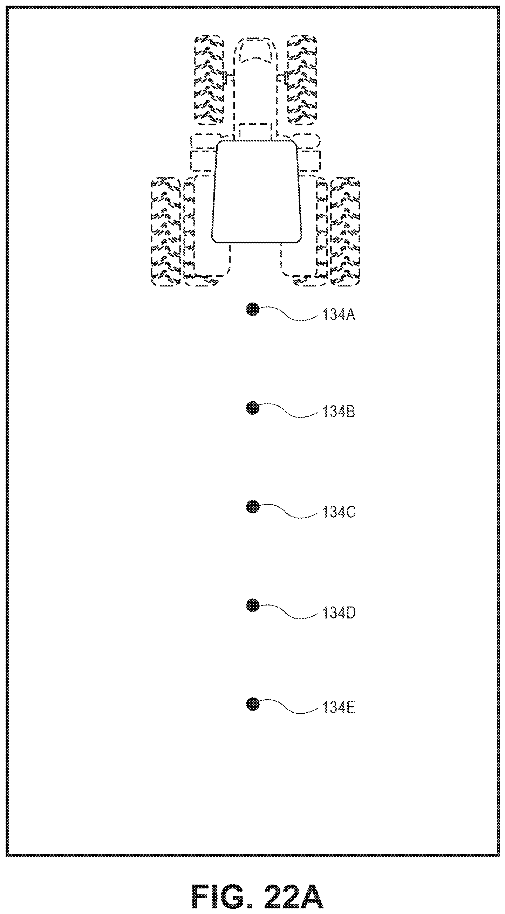

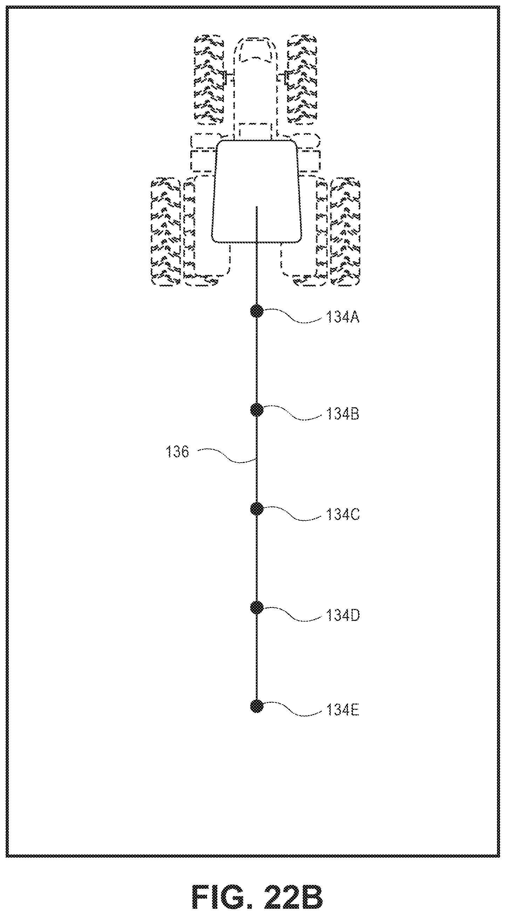

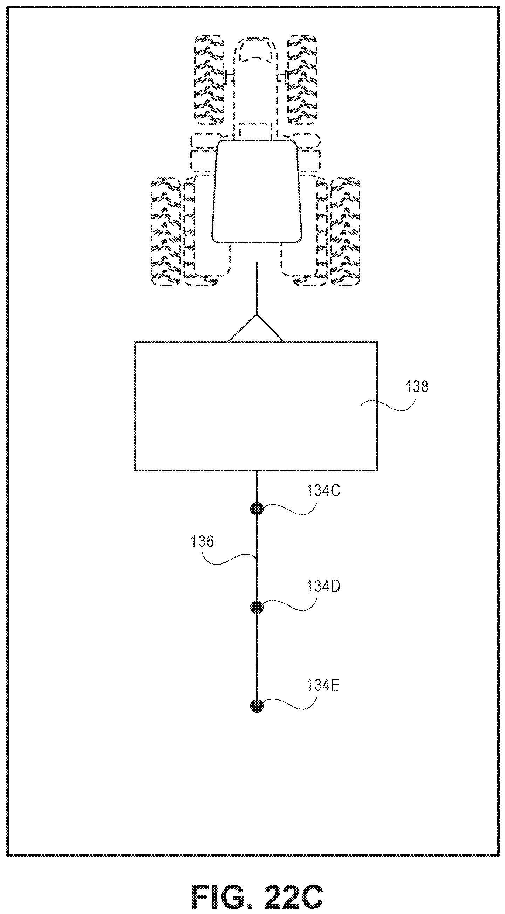

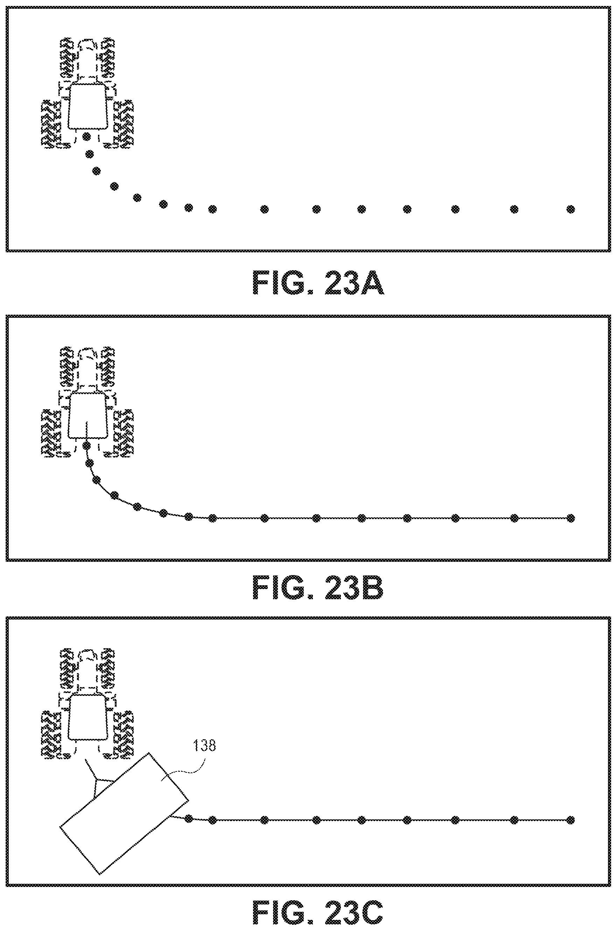

Exemplary scenarios are illustrated in Figs. 22 and 23. Figure 22A illustrates a plurality of geographic locations 134A-E of a tractor as the tractor travels, each of the geographic locations being recorded by the system 52 in, for example, the storage component 64. The system 52 uses the geographic locations to estimate or determine a travel path 136 of the machine as illustrated in Fig. 22B. In this scenario the tractor is traveling a straight path, therefore the system 58 may determine that a trailing attachment 138 is positioned directly behind the machine in this scenario as illustrated in Fig. 22C. If the tractor is pulling an attachment that is designed to trail the tractor at a position offset from a center of the tractor (such as, for example, a mower conditioner), the system 58 may determine that the attachment is not directly behind the machine but rather is behind the machine but offset from a center of the machine. The system 58 may use attachment railing information to determine the amount of offset.

The scenario depicted in Figs. 23A-C illustrates the machine making a turn, such as where a tractor is making a headland turn. In this scenario the system 52 identifies a curved travel path from the series of geographic locations and determines that the attachment 138 is not located immediately behind the machine but rather is offset in the direction of the travel path. In either of the scenarios depicted in Figs. 22 and 23, the system 58 uses the position of the attachment 138 to place a user interface element associated with the attachment, as explained below in greater detail.

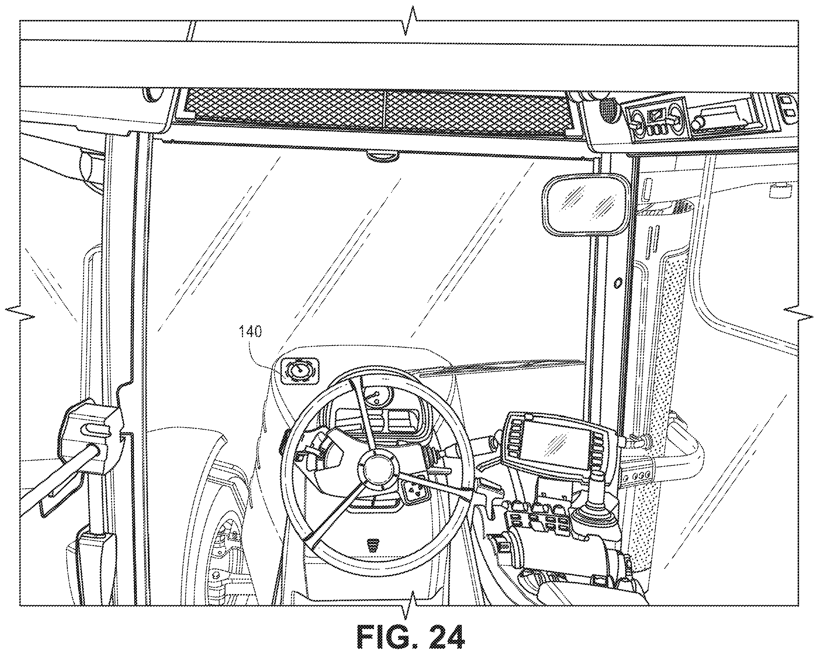

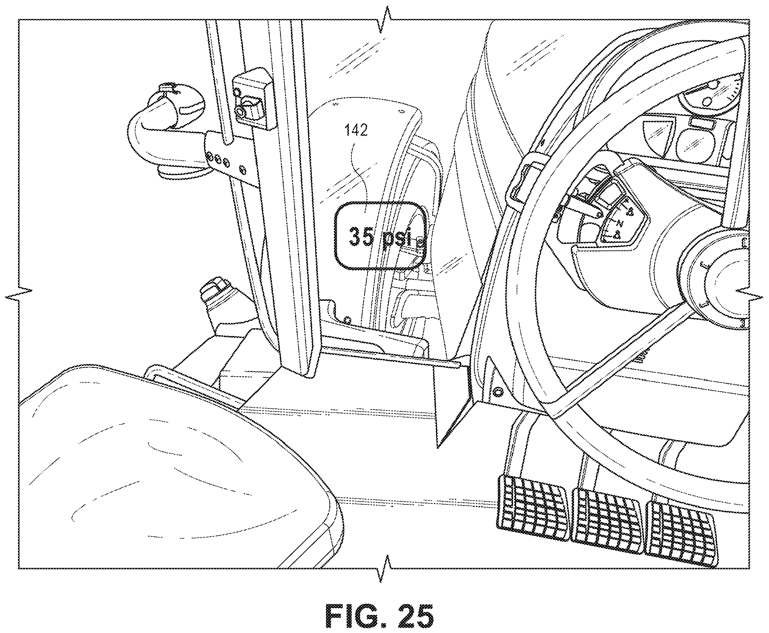

The item of interest may be a component of the mobile machine that is external to the operator cabin, such as an engine, hydraulic motor, fuel tank or tire. Fig. 24 illustrates a user interface element 140 depicting a gauge related to an operating characteristic of the engine and positioned such that, from the operator's perspective, it is superimposed over the engine compartment of the tractor. Similarly, Fig. 25 illustrates a user interface element 142 presenting a tire pressure and positioned such that, from the operator's perspective, it is superimposed over a front wheel of the tractor.

The display location may be on an LCD console or a heads-up display surface. The selected display location may be between a seat in the operator cabin of the machine and the location of the item of interest. One advantage of placing the user interface element between the seat and the location of the item of interest is that when an operator is sitting in the seat and turns his or her head to face the item of interest, the user interface element is within the operator's field of view such that the operator need not turn his or her head to view the user interface element. A user interface element is between the seat and the location of the item of interest if it is placed on a side of the operator cabin that is between the seat and the location of the item of interest, and need not lie directly on a line connecting the seat and the location of the item of interest.

Determining the location of the item of interest relative to the operator cabin may involve determining a geographic location of the mobile machine, determining an orientation of the mobile machine, and determining the geographic location of the item of interest. The geographic location of the mobile machine may be determined by the position determining component 56. The orientation of the machine may be determined using an onboard device such as a digital compass, may be determined using successive geographic locations of the mobile machine in a manner similar to that explained above, or a combination of the two. Determining the geographic location of the item of interest may involve, for example, receiving location information from the item of interest or retrieving location information from an on-board or remote storage device.

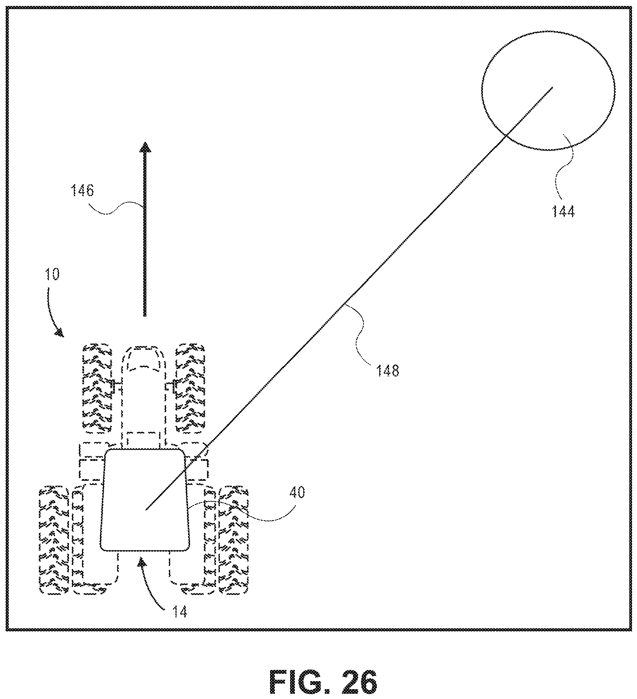

Figure 26 illustrates how this function may be implemented with the tractor 10. The geographic location of the tractor 10 and of an independent object 144 are determined as explained above. Those two pieces of information, alone, do not enable the system to determine which display surfaces may be between the operator's seat 32 and the item of interest 144. Once the orientation of the tractor 10 is known, however, as depicted by the arrow 146, the system 58 may determine which display surfaces are between or most closely between the operator's seat 32 and the item of interest 144. A line 148 connecting the operator's seat 32 and the item of interest 144 may be used to indicate a side of the operator cabin 14 that lies between the operator seat 32 and the independent object 144. In the example illustrated in Fig. 26, the right side of the cabin 14 is between the seat 32 and the item of interest 144. Placing the user interface element between the operator seat 32 and the item of interest 144 may involve placing the user interface element anywhere on the right side of the cabin, such as on the right side window 40. The system 58 may determine when the geographic location of the machine, the geographic location of the object or the orientation of the machine have changed and change the location of the user interface element accordingly. This may be done in real time or in near real time.

In some embodiments, the user interface element may be placed directly in, or proximate to, the operator's line of sight as the operator looks toward the item of interest. The line of sight is between the operator's head and the item of interest such that as the operator looks at the item of interest he or she sees the user interface element superimposed over the item of interest. To place a user interface element within the operator's line of sight with respect to an item of interest the user interface system may determine a location of the operator's head, create a virtual line from the operator's head to the location of the item of interest (similar to the line 148 but connecting the operator's head with the item of interest), determine where the virtual line intersects a display surface, and then place the user interface element at the location where the virtual line intersects the display surface. If the user interface element is to be placed proximate the line of sight but not on it, the same method may be used but the user interface element may be placed near the intersection of the virtual line and the display surface rather than at the intersection. Placing the user interface element near the intersection may involve placing it so that an edge of the element is spaced from the point of intersection by five centimeters, ten centimeters or fifteen centimeters. Figure 17B depicts what a user interface element may look like when placed near the operator's line of sight relative to the item of interest. If the view of Fig. 17B depicts the scene as viewed by the operator, the user interface element 110 is associated with the combine harvester 92 and is placed on the front window 36 to be proximate the operator's line of sight relative to the combine harvester 92. In other words, from the operator's perspective, the user interface element 110 is not directly on the combine harvester 92, but is near it.

The location of the operator's head may be determined by the sensors 72 and the IR/MC component 78 described above. The IR/MC component 78 may be configured, for example, to recognize the operator's head, and if the operator's head is detected from two or more angles (e.g., using two or more cameras), the location of the operator's head in three-dimensional space may be calculated or estimated. Object detection and location technology is known in the art and any of various methods may be used to determine the location of the operator's head within the cabin 14. The user interface system 58 may track the location of the operator's head as it moves, and may revise the location of the user interface element in real time to reflect changes in the location of the operator's head. Thus, if the user interface element is placed directly in the operator's line of sight with respect to the item of interest and the operator leans forward in the seat, the user interface element would also move so that it remains within the operator's line of sight with respect to the item of interest. If the operator then leans back in seat the user interface system would again move the user interface element to follow the location of the operator's head.

In some embodiments of the invention the user interface system 58 estimates the location of the operator's head rather calculating it. Rather than use sensors and image processing to detect the operator's head, for example, the system may simply estimate the position of the operator's head based on an average operator height. Additionally, the user interface system may prompt the operator to submit certain inputs to help estimate a location of the operator's head. Such inputs may include a calibration input wherein the operator is prompted to identify a location on one or more display surfaces that are used to determine the determine the location of the operator's head and use that as an estimate moving forward. An example of this would be where the system 58 prompts the operator to move a graphic on a heads-up display surface until the graphic covers the engine compartment from the operator's perspective. Using the known location of the engine compartment and placement of the graphic, the system 58 may estimate or determine the location of the operator's head. Repeating this process multiple times may increase the accuracy of the estimate location of the operator's head.

The user interface system 58 may generate the user interface element to follow the operator's field of view. The operator's field of view corresponds to the direction the operator is facing. If the operator is facing forward the operator's field of view is the front window 36 of the machine. If the operator is turned looking at an implement behind the machine the field of view is the rear window 42. The user interface system 58 may determine which direction the operator is facing by using face recognition technology and images capture from multiple image capture devices. If an image capture device placed at or near the front of the operator cabin 14 and facing the back of the cabin detects the operator's face, the system 58 determines that the operator is facing forward. If the an image capture device placed at or near a left side of the operator cabin and facing the right of the cabin detects the operator's face, the system 58 determines that the operator is facing the left. This functionality may be useful where the operator desires to keep a user interface element visible regardless of which way the operator is facing.

In one exemplary scenario, the operator desires to monitor the engine temperature and therefore provides an input to the user interface system 58 indicating that an engine temperature user interface element is to remain in his or her field of view. As the operator begins operating the tractor the system detects the user's face in a forward-facing position and determines that the first field of view is the front window of the tractor. The user interface system places the user interface element corresponding to the engine temperature on the front window. During operation of the tractor the user interface system continuously monitors the position of the operator's face and, while the operator is facing forward, leaves the user interface element on the front window. The user interface system detects that the operator has turned his or her head to the right side and determines that the current field of view is the right side window of the tractor and places the user interface element on that window. Later the user interface system detects that the operator has turned his or her head so that it is again facing the front of the operator cabin, wherein the user interface system determines that the current field of view is the front window of the cabin and again places the user interface element on the front window.

The user interface system 58 may enable the operator to select how user interface elements are presented on the display surfaces. The user may indicate that user interface elements corresponding to independent objects and attachments are to be placed in the line of sight with respect to each associated object or attachment, or may indicate that all user interface elements are to be placed at a top or a bottom of the heads-up display surface to avoid interfering with the operator's view. Furthermore, the operator may indicate that all user interface elements be placed in fixed locations and not move at all, regardless of the operator's position or field of view.

The user interface system 58 may present multiple user interface elements, some associated with independent objects, some associated with attachments and/or some associated with machine components. Some of the user interface elements may be placed in the operator's line of sight, as explained above, some user interface elements may follow the operator's field of view outside his or her line of sight, and some user interface elements may be in fixed locations. The operator may determine how each user interface element is treated, as explained above.

Embodiments of the invention leverage components of the user interface system 58 to enable advanced user inputs, including gestures and sounds, that may be defined by the operator. The operator may configure the user interface system 58 to detect virtually any gesture or sound and to perform virtually any action or function associated with the mobile machine. Actions or functions associated with operator-defined inputs may include mechanical movement or operation of the machine, such as controlling the machine's speed and direction, controlling the machine's engine speed, or controlling auxiliary functions including power take off and linkage. Actions or functions associated with operator-defined inputs may also include non-mechanical functions such as adjusting user interface settings, communicating with other machines or remote computing systems, retrieving information from the communications and control system, and operating internal or external lights, to name a few. Furthermore, actions or functions associated with operator-defined inputs may be performed on or by attachments coupled with the machine.

The user interface system 58 may be configured to detect and identify gestures made with the operator's fingers, hands, arms, legs and feet, as explained above. The operator may program the actions or functionality associated with particular gestures or sounds by providing an input to the user interface system 58 to put the system 58 in input recording mode wherein the system 58 detects and records operator movement or sound. The recorded movement or sound is then assigned to a function or action performed by the machine, such as one of the functions or actions described above. The operator may submit an input indicating the function or action assigned to the recorded movement or sound. The operator may submit the input indicating the function by either selecting a predefined function, such as turn on external lights or slow forward speed by ten percent, or may define an action or sequence of actions. Defining an action or sequence of actions may include placing the user interface system in action recording mode and performing an action or sequence of actions that are then recorded by the user interface system 58. It may be desirable to define an action where a series of steps are repeated, such as where a machine is working in a field and performs a series of steps each time the machine enters and exits a headland of the field or where a machine with a bucket performs a series of steps to dump the contents of the bucket into a truck. In both of those examples the same steps may be repeated such that the operator may record the series of steps involved, assign the steps to a simple user input, and then subsequently perform the steps using the simple user input.

The operator has the freedom to define virtually any movement or sound as an input and to associate the movement or sound with virtually any machine function or action. This allows the operator to select input methods that he or she is most comfortable with and to assign those inputs to actions that are most frequently performed. This may greatly increase the convenience of operating the machine and reduce operator fatigue.

Examples of movement or sound that may be recorded as input and examples of associated actions or functions include one hand clap stops the machine from moving; two consecutive hand claps stop the machine from moving and deactivates all auxiliary functions; three consecutive hand claps immediately shut down all engines and motors on the machine; extending both hands forward with palms facing upward and moving both hands in an upward motion causes a combine harvester to raise a header attached to the combine, and the same motion with palms facing downward and both hands moved in a downward motion causes the header to move downward; extending both hands forward with palms facing upward and moving both hands in an upward motion causes a loader bucket to be raised, and the same motion with palms facing downward and both hands moved in a downward motion causes the loader bucket to be lowered; the spoken works "entering headland" may cause the header of a combine harvester to raise and functions associated with the header to be slowed or stopped; the spoken works "entering crop" may cause the header of a combine harvester to be returned to a harvesting position and functions associated with the header to be activated; pointing a finger to the right causes a wayline nudge to the right and pointing to the left causes a wayline nudge to the left; the spoken words "nudge right" causes a wayline nudge to the right and the spoken words "nudge left" causes a wayline nudge to the left; extending both hands forward, closing the hands to form fists and moving both hands forward simultaneously causes the machine to travel faster, moving both hands back simultaneously causes the machine to travel slower. These are but a few examples.

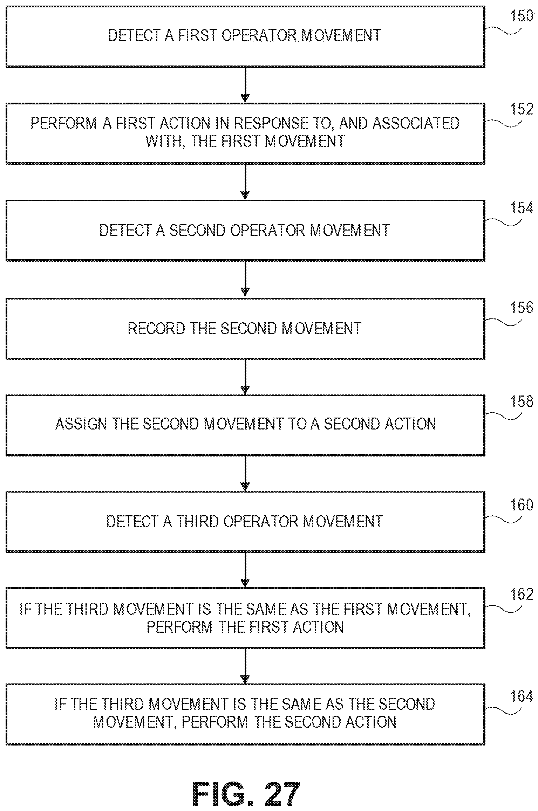

An exemplary method of implementing the advanced, programmable user inputs discussed herein is illustrated in Fig. 27. The method of Fig. 27 involves detecting operator movement for illustrative purposes with the understanding that the same method may be used to detect sound. The system 58 detects a first operator movement, as depicted in block 150. The movement may be detected using data from one or more of the sensors 72, such as optical sensors, and may be associated with the operator's arms, hands, fingers, legs or feet, as explained above. The system 58 performs a first action in response to, and associated with, the first movement, as depicted in block 152. Both the first movement and the first action may have been previously recorded by the operator, as explained above. The first action may be on a machine component, such as actuating a linkage system or a component of an onboard hydraulic system. Alternatively the first action may be on an attachment, such as a implement pulled by the machine. An action associated with an attachment may involve communicating a command to a system of the attachment via wired or wireless communications.

The system 58 detects a second movement of the operator, as depicted in block 154, and records the second movement, as depicted in block 156. The system 58 may record the second movement in response to a user input indicating an input recording mode, as explained above. The system 58 assigns the second operator movement to a second action, as depicted in block 158. The second action is different than the first action but, like the first action, may be associated with a component or system of the machine or with an attachment. The system then detects a third operator movement, as depicted in block 160, and compares the third movement to stored movements. If the third movement is the same as the first movement, the machine performs the first action, as depicted in block 162. If the third movement is the same as the second movement, the machine performs the second action, as depicted in block 164.

In some embodiments of the invention, the machine operator may save user interface preferences and settings in a user profile in the communications and control system 52 and retrieve the preferences and settings at a later time, thus saving the operator the time and effort involved in setting up the user interface system 58 to his or her preferences each time the operator uses the machine. The user interface preferences and settings in the user profile are unique to the operator, such that each operator may have his or her own profile and multiple user profiles may be stored on (or are retrievable by) the machine.

User interface preferences may include how and where user interface elements are presented, which gestures and sounds are used as inputs, and which actions those inputs correspond to. Taller machine operators may desire to place user interface elements near the bottom of the windows to avoid obstructing their view, while shorter machine operators may desire to place user interface elements near the top of the windows for the same reason. In some instances machine operators may desire for some user interface elements to be within his or her line of sight with respect to items of interest outside the operator cabin, and may desire for some user interface elements to be visible but in peripheral locations.

To associate user interface preferences and settings with a user profile, the system 58 may identify the machine operator, associate the machine operator with an operator profile and record the preferences and settings submitted by the machine operator. The system 58 may identify the operator automatically, such as where the system uses facial recognition or other biometric recognition techniques, or may employ manual means to identify the operator such as where the system prompts the operator to submit a user name or other identifying information via an element of the user interface.

The user profile may roam from machine to machine and may include information specific to the machine the operator is presently operating. If multiple machines are interconnected via a communications network, as illustrated in Fig. 15, the user profile may be stored in a single location, such as a remote server, and may be retrieved by the particular machine the operator is presently operating. Because the user profile may be used with different kinds of machines, such as tractors and combines, that have different user interface systems, different auxiliary functions and different operating characteristics, the user profile will be unique to each machine. The same inputs may be associated with different actions, for example, when used in different machines. Thus, each time the user profile is communicated to a particular machine the system may first identify the machine and apply the particular preferences and settings associated with that machine when implementing the user profile.

Some user profile settings and preferences may be applicable to more than one machine, while others may be applicable to only a single machine. User profile preferences and settings relating to the operation of a grain unload mechanism for a combine harvester may be identical across multiple types of combine harvesters. User profile preferences and settings relating to the operation of the header of the combine harvester may be different for different headers, for different types of crops being harvested, or both.

In an exemplary scenario a user operating a tractor adjusts the user interface settings and preferences, including selecting a number of user interface elements relating to machine components to be presented and to place a first group of those user interface elements along the top edges of cabin windows (as part of a heads-up display) and to place another group of those user interface elements in locations proximate the corresponding machine components. The operator may move one or more of the user interface elements to desired locations on the display surfaces using a method described above. During operation of the machine the user interface system automatically presents user interface elements relating to independent objects in the vicinity of the tractor, including other mobile machines and/or fixed structures. As the user interface system 58 presents each user interface element the operator determines how the element will be presented, such as a size, appearance and location of the element. The user interface system 58 may present each user interface element according to a default size and location (for example, at the top edges of the windows), and the operator may make changes to the size and placement as desired. The operator may place some of the user interface elements into a line of site with respect to the corresponding object, and may move other of the interface elements into a position proximate the line of sight.

The operator may also configure sound inputs, if the user interface system is configured to receive sound inputs. For example, the operator may program the user interface system to stop movement of the machine upon detecting a single clap, stop movement of the machine and any auxiliary systems upon detecting two consecutive claps, or immediately shutting down all machine functions upon detecting three consecutive claps. Alternatively, the user interface system may be configured to detect spoke words, such as "stop" or "shut down." As the operator submits these preferences the user interface system records them as part of the operator's profile, which may be stored locally on the machine, at a location remote from the machine, or both.

When the operator returns to the tractor at a later date and begins operating the machine, the user interface system identifies the operator, retrieves the operator's profile, and sets up the user interface according to the settings and preferences in the user profile. If the operator makes further adjustments to the settings and preferences the user interface system records the adjustments as part of the operator's profile.

This functionality may be implemented in multiple machines such that when the operator leaves a first machine and begins using a second machine, the second machine retrieves the operator's profile and implements the user interface according to the operator's preferences and settings. If the two machines are identical the user interface system 58 of the second machine may implement the user interface exactly as it was implemented in the first machine. If the second machine is different than the first machine, however, the second machine's user interface system 58 may implement a different set of preferences and settings than the first machine's. If the first machine is a combine harvester and the second machine is a tractor, for example, any user interface settings associated with operation of the harvester's header would not be applicable to the tractor and, thus, would not be implemented. However, user interface gestures or sounds associated with stopping or shutting down the tractor may be implemented on the combine harvester as well.

When a machine's user interface system 58 implements an operator's profile, it identifies and implements those portions of the profile that apply to that particular machine. Each user profile may indicate which portions of the profile relate to each machine. In this manner the profile roams from machine to machine, following the operator, and changes made to the profile in a first machine may carry over to one or more other machines.

The user interface system 58 may determine when particular attachments are coupled with a machine and implement user profile settings specifically associated with the attachment or attachments. The communications and control system 52 may determine when an attachment is coupled with the machine when the operator submits an input indicating that the attachment is coupled with the machine or automatically using sensors to detect the presence of the attachment, as explained above. When the user interface system determines that an attachment is coupled with the machine it may present a user interface element associated with the attachment, as explained above. The operator may determine preferences and settings, such as size, appearance and placement, relating to that user interface element, as explained above. The user interface system 58 records the preferences and settings submitted by the operator as part of the operator's profile. When the attachment is decoupled from the machine the user interface system 58 removes the user interface element associated with attachment, and when the attachment is coupled with the machine again the user interface system 58 presents the user interface element associated with the attachment according to the settings and preferences previously indicated by the operator. Furthermore, if the operator is subsequently operating a second machine and the same attachment is coupled with the second machine, the user interface system 58 of the second machine may present the user interface element according to the preferences and settings submitted by the operator when he or she was operating the first machine. In this manner user profile settings relating to attachments also follow operators from machine to machine.

The user interface system 58 may determine when a machine is performing a particular task and implement user profile settings specifically associated with the task. An operator may submit a first set of preferences and settings when performing a first task and a second set of preferences and settings when performing a second task, even if the machine and any attachments associated with the machine have not changed. The communications and control system 52 may be configured to detect the particular task and implement the user interface according to the operator's preferences and settings according to that task.

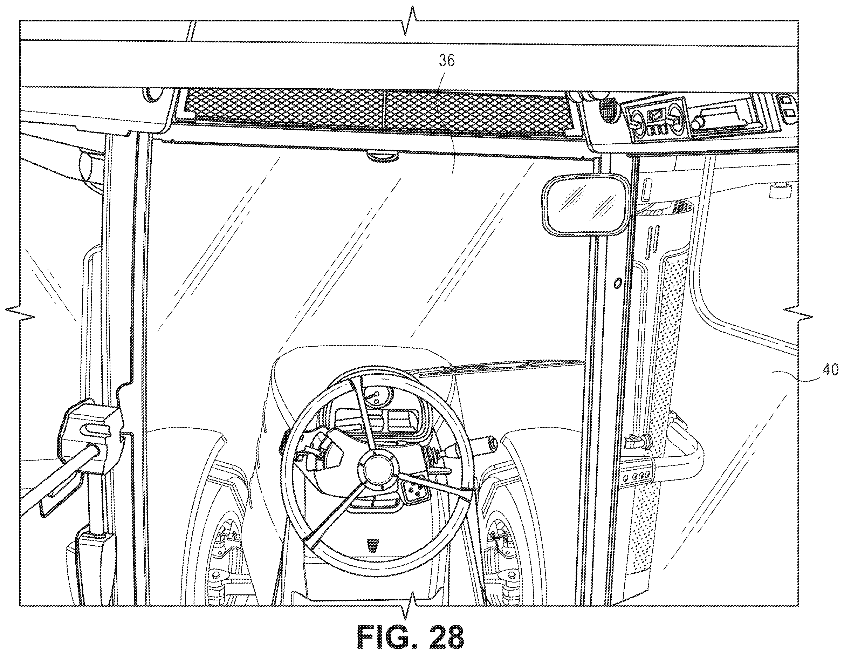

The exemplary embodiments of the invention described herein and illustrated in the drawings provide advantages over existing user interface systems for mobile machines. Embodiments of the invention provide user interface systems, for example, that make a greater amount of information available to machine operators in a manner that is natural, intuitive and easy to use. Furthermore, embodiments of the present invention may eliminate the need for some or all of the physical user interface elements of mobile machines including display consoles and physical control components such as buttons, knobs, switches and levers. An exemplary machine operator cabin is illustrated in Fig. 28, the cabin being similar to the cabin illustrated in Figs. 3-5 except that the physical controls have been removed. Functions previously performed by physical controls and display consoles may be performed by image capture devices and a heads-up display incorporating principles of the present invention. Removing the physical controls may expand the operator's view through the front window 36 and the right side window 40.

Although the invention has been described with reference to the preferred embodiment illustrated in the attached drawing figures, it is noted that equivalents may be employed and substitutions made herein without departing from the scope of the invention as recited in the claims.

Having thus described the preferred embodiment of the invention, what is claimed as new and desired to be protected by Letters Patent includes the following:

## Claims

1. A mobile machine (10, 22) comprising:
an operator cabin (14, 26);
a seat (32) in the operator cabin; and
one or more computing devices (52) configured to determine (122) a location of an item of interest (92) external to the operator cabin,
**characterized in that** the one or more computing devices (52) are further configured to:
select (124) one of a plurality of display locations (82) inside the operator cabin, the selected one of the plurality of display locations being between the seat (32) and the location of the item of interest (92), and
present (126) a user interface element (110) at the selected one of the plurality of display locations (82), the user interface element (110) being associated with the item of interest (92).

2. The mobile machine as set forth in claim 1, further comprising -
a heads-up display system (80) including a heads-up display surface on each of a plurality of sides (36, 40) of the operator cabin (14), and
wherein the one or more computing devices (52) selects the one of the plurality of display locations (82) by selecting a heads-up display surface corresponding to a side (36, 40) of the operator cabin between the seat (32) and the item of interest (92).

3. The mobile machine as set forth in claim 1, the one or more computing devices (52) configured to -
determine a geographic location of the mobile machine (10), an orientation of the mobile machine, and a geographic location of the item of interest (92), and
select the one of the plurality of display locations (82) using the geographic location of the mobile machine, the orientation of the mobile machine, and the geographic location of the item of interest.

4. The mobile machine as set forth in claim 1, the one or more computing devices (52) configured to -
determine that the item of interest is attached to the mobile machine,
determine attachment state information, and
determine the location of the item of interest by determining a position of the item of interest relative to the mobile machine using the attachment state information.

5. The mobile machine as set forth in claim 1, the one or more computing devices (52) configured to -
receive an input from an operator, and
in response to the input, place the UI element (110) at a fixed display location and maintain the UI element at the fixed display location regardless of the location of the item of interest (92).

6. The mobile machine as set forth in claim 1, the item of interest being a second, independent mobile machine (92).

7. The mobile machine as set forth in claim 1, the item of interest being a stationary, fixed structure.

8. The mobile machine as set forth in claim 1, the one or more computing devices (52) further configured to -
in response to a change in the location of the mobile machine (10), a change in the orientation of the mobile machine or a change in the location of the item of interest (92), select a second display location (88) inside the operator cabin (14), the second display location being between the seat (32) and the location of the item of interest, and
present the user interface element (110) at the second display location (88).

9. The mobile machine as set forth in claim 1, the one or more computing devices (52) further configured to -
determine a location of an operator's head within the operator cabin (14),
determine a line of site from the operator's head to the location of the item of interest (92), and
select the display location (82) such that the display location corresponds to the line of sight.

10. The mobile machine as set forth in claim 9, the one or more computing devices (52) being configured to -
receive an input from an operator indicating a user interface layout preference, the preference indicating whether a user interface element (110) is within a line of sight of the operator's head,
place the user interface element (110) in the line of sight if the input indicates that the user interface element will be in the line of sight, and pl
ace the user interface element (110) outside the line of sight if the input indicates the user interface element will be outside the line of sight.

11. The mobile machine as set forth in claim 1, the one or more computing devices (52) further configured to -
estimate a location of an operator's head within the operator cabin (14),
determine a line of site from the estimated location of the operator's head to the location of the item of interest (92), and
select the display location (82) such that the display location corresponds to the line of sight.

12. The mobile machine as set forth in claim 1, further comprising -
a communications gateway (68) for enabling wireless communications with external machines,
the one or more computing devices (52) further configured to - receive information from the item of interest (92) via the communications gateway, and present the information as part of the user interface element (110).

13. The mobile machine as set forth in claim 1, further comprising -
a sensor for detecting an orientation of an operator,
the one or more computing devices (52) further configured to - determine a first field of view of the operator using data from the sensor, position the user interface element (110) so that it is within the first field of view, determine a second field of view of the operator using data from the sensor, and reposition the user interface element (110) so that it is within the second field of view.

14. The mobile machine as set forth in claim 1, further comprising a communications gateway (68) for enabling wireless communications, wherein the one or more computing devices (52) are configured to -
determine a location of a first item of interest (92) using information received via the communications gateway,
select one of a plurality of display locations (82) being between the seat (32) and the location of the first item of interest,
present a first user interface element (110) at the selected one of the plurality of display locations, the first user interface element associated with the first item of interest, and
present a second user interface element at a second display location, the second display location being between the seat and the location of a second item of interest, the second item of interest being part of the machine (10) but external to the operator cabin (14), the second user interface element being associated with the second item of interest.

15. The mobile machine as set forth in claim 14, further comprising -
a heads-up display system (80) including a heads-up display surface on each of a plurality of sides (36, 40) of the operator cabin, and
the one or more computing devices (52) being configured to -
select the one of the plurality of display locations (82) by selecting a first heads-up display surface corresponding to a first side (40) of the operator cabin (14) between the seat (32) and the item of interest (92), and
present the second user interface element on a second heads-up display surface corresponding to a second side (36) of the operator cabin (14) between the seat and the item of interest.

16. The mobile machine as set forth in claim 14,
the first item of interest being an implement connected to the mobile machine (10), and
the one or more computing devices (52) being configured to -
determine when the implement is connected to the mobile machine, and
present the second user interface element only when the implement is connected to the mobile machine.

17. The mobile machine as set forth in claim 1, further comprising a heads-up display system (80) including a plurality of display surfaces (36, 40), the one or more computing devices (52) being configured to -
automatically determine a location of each of a plurality of objects external to the operator cabin (14),
automatically determine an orientation of the mobile machine (10) relative to the external objects,
using the locations of the objects and the orientation, automatically determine a position for each one of a plurality of user interface elements (110), each user interface element associated with one of the objects, the position of each user interface element corresponding to one of the plurality of display surfaces between the operator seat and the location of the object associated with the user interface element, and
automatically presenting the plurality of user interface elements (110) on the heads-up display in the determined positions.

18. The mobile machine as set forth in claim 17, the one or more computing devices (52) further configured to -
automatically determine a location of an operator's head within the operator cabin (14), and au
tomatically determine the position for each one of the plurality of user interface elements (110) such that the position of each user interface element corresponds to a line of site between the operator's head and the location of the object associated with the user interface element.

19. The mobile machine as set forth in claim 18, the one or more computing devices (52) further configured to -
automatically estimate a location of an operator's head within the operator cabin (14), and au
tomatically determine the position for each one of the plurality of user interface elements (110) such that the position of each user interface element corresponds to a line of site between the operator's head and the location of the object associated with the user interface element.

20. The mobile machine as set forth in claim 17, each of the display surfaces (36, 40) corresponding to a window of the operator cabin (14).

## Patentansprüche

1. Mobile Maschine (10, 22) mit:
einer Bedienerkabine (14, 26);
einem Sitz (32) in der Bedienerkabine; und
einem oder mehreren Rechengeräten (52), die konfiguriert sind, um den Ort einer Sache von Interesse (92) außerhalb der Bedienerkabine zu bestimmen (122), **dadurch gekennzeichnet, dass** das eine oder die mehreren Rechengeräte weiterhin konfiguriert sind, um:
eine Mehrzahl von Anzeigeorten (82) in der Bedienerkabine auszuwählen (124), wobei der ausgewählte Anzeigeort der Mehrzahl von Anzeigeorten zwischen dem Sitz (32) und der Sache von Interesse (92) liegt, und
ein Benutzerschnittstellenelement (110) an dem ausgewählten Anzeigeort der Mehrzahl von Anzeigeorten (82) zu präsentieren, wobei das Benutzerschnittstellenelement (110) mit der Sache von Interesse (92) verknüpft ist.

2. Mobile Maschine nach Anspruch 1, weiterhin mit:
einem Head-Up-Anzeigesystem (80) mit einer Head-Up-Anzeigeoberfläche an jeder der Mehrzahl von Seiten (36, 40) der Bedienerkabine (14), und
wobei das eine oder die mehreren Rechengeräte (52) den einen der Mehrzahl von Anzeigeorten (82) durch Auswählen einer Head-Up-Anzeigeoberfläche auswählt, die einer Seite (36, 40) der Bedienerkabine zwischen dem Sitz (32) und der Sache von Interesse (92) entspricht.

3. Mobile Maschine nach Anspruch 1, wobei das eine oder die mehreren Rechengeräte (52) konfiguriert sind, um:
eine geographische Lage der mobilen Maschine (10), eine Ausrichtung der mobilen Maschine und eine geographische Lage der Sache von Interesse (92) zu bestimmen, und
den einen Anzeigeort der Mehrzahl von Anzeigeorten (82) unter Verwendung der geographischen Lage der mobilen Maschine, der Ausrichtung der mobilen Maschine und der geographischen Lage der Sache von Interesse auszuwählen.

4. Mobile Maschine nach Anspruch 1, wobei das eine oder die mehreren Rechengeräte (52) konfiguriert sind, um:
festzustellen, dass die Sache von Interesse an der mobilen Maschine befestigt ist,
Befestigungsstatusinformationen zu bestimmen, und
den Ort der Sache von Interesse festzustellen, indem eine Position der Sache von Interesse relativ zu der mobilen Maschine unter Verwendung der Befestigungsstatusinformationen bestimmt wird.

5. Mobile Maschine nach Anspruch 1, wobei das eine oder die mehreren Rechengeräte (52) konfiguriert sind, um:
eine Eingabe von einem Bediener zu empfangen, und
als Reaktion auf die Eingabe das Benutzerschnittstellenelement (110) an einem festen Anzeigeort zu platzieren und das Benutzerschnittstellenelement, unabhängig von dem Ort der Sache von Interesse (92), an dem festen Anzeigeort beizubehalten.

6. Mobile Maschine nach Anspruch 1, wobei die Sache von Interesse eine zweite, unabhängige mobile Maschine (92) ist.

7. Mobile Maschine nach Anspruch 1, wobei die Sache von Interesse eine unbewegliche, feste Struktur ist.

8. Mobile Maschine nach Anspruch 1, wobei das eine oder die mehreren Rechengeräte (52) weiterhin konfiguriert sind, um:
als Reaktion auf eine Veränderung des Orts der mobilen Maschine (10), eine Veränderung der Ausrichtung der mobilen Maschine oder eine Veränderung des Orts der Sache von Interesse (92) einen zweiten Anzeigeort (88) in der Bedienerkabine (14) auszuwählen, wobei der zweite Anzeigeort zwischen dem Sitz (32) und der Sache von Interesse liegt, und
das Benutzerschnittstellenelement (110) an dem zweiten Anzeigeort (88) zu präsentieren.

9. Mobile Maschine nach Anspruch 1, wobei das eine oder die mehreren Rechengeräte (52) weiterhin konfiguriert sind, um:
einen Ort des Kopfs des Bedieners in der Bedienerkabine (14) zu bestimmen,
ein Blickfeld von dem Kopf des Bediener zu dem Ort der Sache von Interesse (92) zu bestimmen, und
den Anzeigeort (82) so auszuwählen, dass der Anzeigeort dem Blickfeld entspricht.

10. Mobile Maschine nach Anspruch 9, wobei das eine oder die mehreren Rechengeräte (52) konfiguriert sind, um:
eine Eingabe von einem Bediener zu empfangen, die eine Benutzerschnittstellen-Layout-Präferenz anzeigt, wobei die Referenz anzeigt, ob sich ein Benutzerschnittstellenelement (110) in dem Blickfeld des Kopfs des Bediener befindet,
das Benutzerschnittstellenelement (110) in dem Blickfeld zu platzieren, falls die Eingabe anzeigt, dass sich das Benutzerschnittstellenelement in dem Blickfeld befinden wird, und
das Benutzerschnittstellenelement (110) außerhalb des Blickfeld zu platzieren, falls die Eingabe anzeigt, dass sich das Benutzerschnittstellenelement außerhalb des Blickfeld befinden wird.

11. Mobile Maschine nach Anspruch 1, wobei das eine oder die mehreren Rechengeräte (52) weiterhin konfiguriert sind, um:
einen Ort des Kopfs eines Bedieners in der Bedienerkabine (14) abzuschätzen,
ein Blickfeld von dem abgeschätzten Ort des Kopfs des Bedieners zu dem Ort der Sache von Interesse (92) zu bestimmen, und
den Anzeigeort (82) so auszuwählen, dass der Anzeigeort dem Blickfeld entspricht.

12. Mobile Maschine nach Anspruch 1, weiterhin mit:
einem Kommunikations-Gateway (68) zum Ermöglichen einer drahtlosen Kommunikation mit externen Maschinen,
wobei das eine oder die mehreren Rechengeräte (52) weiterhin konfiguriert sind, um:
Informationen von der Sache von Interesse (92) über das Kommunikations-Gateway zu empfangen, und
die Informationen als Teil des Benutzerschnittstellenelements (110) zu präsentieren.

13. Mobile Maschine nach Anspruch 1, weiterhin mit:
einem Sensor zum Detektieren einer Ausrichtung eines Bedieners,
wobei das eine oder die mehreren Rechengeräte (52) weiterhin konfiguriert sind, um:
ein erstes Blickfeld des Bedieners unter Verwendung von Daten von dem Sensor zu bestimmen,
das Benutzerschnittstellenelement (110) so zu positionieren, dass es innerhalb des ersten Blickfelds liegt,
ein zweites Blickfeld des Bedieners unter Verwendung von Daten von dem Sensor zu bestimmen, und
das Benutzerschnittstellenelement (110) so zu verlegen, dass es innerhalb des zweiten Blickfelds liegt.

14. Mobile Maschine nach Anspruch 1, weiterhin mit einem Kommunikations-Gateway (68) zum Ermöglichen einer drahtlosen Kommunikation, wobei das eine oder die mehreren Rechengeräte (52) konfiguriert sind, um:
einen Ort einer ersten Sache von Interesse (92) unter Verwendung von Informationen zu bestimmen, die über das Kommunikations-Gateway empfangen wurden,
einen Anzeigeort einer Mehrzahl von Anzeigeorten (82) zwischen dem Sitz (32) und dem Ort der ersten Sache von Interesse auszuwählen,
ein erstes Benutzerschnittstellenelement (110) an dem ausgewählten Anzeigeort der Mehrzahl von Anzeigeorten zu präsentieren, wobei das erste Benutzerschnittstellenelement mit der ersten Sache von Interesse verknüpft ist, und
ein zweites Benutzerschnittstellenelement an einem zweiten Anzeigeort zu präsentieren, wobei der zweite Anzeigeort zwischen dem Sitz und dem Ort einer zweiten Sache von Interesse liegt, wobei die zweite Sache von Interesse Teil der Maschine (10) ist, sich aber außerhalb der Bedienerkabine (14) befindet, wobei das zweite Benutzerschnittstellenelement mit der zweiten Sache von Interesse verknüpft ist.

15. Mobile Maschine nach Anspruch 14, weiterhin mit:
einem Head-Up-Anzeigesystem (80) mit einer Head-Up-Anzeigeoberfläche an jeder der Mehrzahl von Seiten (36, 40) der Bedienerkabine (14), und
wobei das eine oder die mehreren Rechengeräte (52) konfiguriert sind, um:
den einen Anzeigeort der Mehrzahl von Anzeigeort (82) durch Auswahl einer ersten Head-Up-Anzeigeoberfläche auszuwählen, die einer ersten Seite (40) der Bedienerkabine zwischen dem Sitz (32) und der Sache von Interesse (92) entspricht, und
das zweite Benutzerschnittstellenelement auf einer zweiten Head-Up-Anzeigeoberfläche zu präsentieren, die einer zweiten Seite (36) der Bedienerkabine zwischen dem Sitz und der Sache von Interesse entspricht.

16. Mobile Maschine nach Anspruch 14, wobei
die erste Sache von Interesse ein mit der mobilen Maschine (10) verbundenes Anbaugerät ist, und
das eine oder die mehreren Rechengeräte (52) konfiguriert sind, um:
festzustellen, wann das Anbaugerät mit der mobilen Maschine verbunden ist, und
das zweite Benutzerschnittstellenelement nur dann zu präsentieren, wenn das Anbaugerät mit der mobilen Maschine verbunden ist.

17. Mobile Maschine nach Anspruch 1, weiterhin mit einem Head-Up-Anzeigesystem (80) mit einer Mehrzahl von Anzeigeoberfläche (36, 40), wobei das eine oder die mehreren Rechengeräte (52) konfiguriert sind, um:
einen Ort jedes Objekts einer Mehrzahl von Objekten außerhalb der Bedienerkabine (14) automatisch zu bestimmen,
eine Ausrichtung der mobilen Maschine (10) relativ zu den externen Objekten automatisch zu bestimmen,
unter Verwendung der Orte der Objekte und der Ausrichtung eine Position für jedes Benutzerschnittstellenelement der Mehrzahl von Benutzerschnittstellenelemente (110) automatisch zu bestimmen, wobei jedes Benutzerschnittstellenelement mit einem der Objekte verknüpft ist, wobei die Position jedes Benutzerschnittstellenelements einer Anzeigeoberfläche der Mehrzahl von Anzeigeoberflächen zwischen dem Bedienersitz und dem mit dem Benutzerschnittstellenelement verknüpften Objekt entspricht, und
die Mehrzahl von Benutzerschnittstellenelementen (110) auf der Head-Up-Anzeige in den bestimmten Positionen automatisch zu präsentieren.

18. Mobile Maschine nach Anspruch 17, wobei das eine oder die mehreren Rechengeräte (52) weiterhin konfiguriert sind, um:
einen Ort des Kopfs des Bedieners in der Bedienerkabine (14) automatisch zu bestimmen, und
die Position jedes Benutzerschnittstellenelements der Mehrzahl von Benutzerschnittstellenelementen (110) automatisch so zu bestimmen, dass die Position jedes Benutzerschnittstellenelements einem Blickfeld zwischen dem Kopf des Bedieners und dem Ort des mit dem Benutzerschnittstellenelement verknüpften Objekts entspricht.

19. Mobile Maschine nach Anspruch 18, wobei das eine oder die mehreren Rechengeräte (52) weiterhin konfiguriert sind, um:
einen Ort des Kopfs des Bedieners in der Bedienerkabine (14) automatisch abzuschätzen, und
die Position jedes Benutzerschnittstellenelements der Mehrzahl von Benutzerschnittstellenelementen (110) automatisch so zu bestimmen, dass die Position jedes Benutzerschnittstellenelements einem Blickfeld zwischen dem Kopf des Bedieners und dem Ort des mit dem Benutzerschnittstellenelement verknüpften Objekts entspricht.

20. Mobile Maschine nach Anspruch 17, wobei jede der Anzeigeoberflächen (36, 40) einem Fenster der Bedienerkabine (14) entspricht.

## Revendications

1. Machine mobile (10, 22) comprenant :
une cabine d'opérateur (14, 26) ;
un siège (32) dans la cabine d'opérateur ; et
un ou plusieurs dispositifs de calcul (52) configurés de manière à déterminer (122) un emplacement d'un élément d'intérêt (92) externe à la cabine d'opérateur,
**caractérisée en ce que** le ou les dispositifs de calcul (52) sont, en outre, configurés de manière à :
sélectionner (124) l'un d'une pluralité d'emplacements d'affichage (82) à l'intérieur de la cabine d'opérateur, celui des emplacements sélectionné de la pluralité d'emplacements d'affichage étant agencé entre le siège (32) et l'emplacement de l'élément d'intérêt (92), et
présenter (126) un élément d'interface d'utilisateur (110) au niveau de l'emplacement sélectionné de la pluralité d'emplacements d'affichage (82), l'élément d'interface d'utilisateur (110) étant associé à l'élément d'intérêt (92).

2. Machine mobile selon la revendication 1, comprenant, en outre :
un dispositif d'affichage tête haute (80) comportant une surface d'affichage tête haute sur chacun d'une pluralité de côtés (36, 40) de la cabine d'opérateur (14), et
dans laquelle le ou les dispositifs de calcul (52) sélectionne le premier de la pluralité d'emplacements d'affichage (82) en sélectionnant une surface d'affichage tête haute correspondant à un côté (36, 40) de la cabine d'opérateur entre le siège (32) et l'élément d'intérêt (92).

3. Machine mobile selon la revendication 1, le ou les dispositifs de calcul (52) étant configurés de manière à :
déterminer une position géographique de la machine mobile (10), une orientation de la machine mobile et une position géographique de l'élément d'intérêt (92), et
sélectionner le premier de la pluralité d'emplacements d'affichage (82) en utilisant la position géographique de la machine mobile, l'orientation de la machine mobile, et la position géographique de l'élément d'intérêt.

4. Machine mobile selon la revendication 1, le ou les dispositifs de calcul (52) étant configurés de manière à :
déterminer que l'élément d'intérêt est fixé sur la machine mobile,
déterminer les informations d'état de fixation, et
déterminer l'emplacement de l'élément d'intérêt en déterminant une position de l'élément d'intérêt par rapport à la machine mobile en utilisant les informations d'état de fixation.

5. Machine mobile selon la revendication 1, le ou les dispositifs de calcul (52) étant configurés de manière à :
recevoir une entrée à partir d'un opérateur, et
en réponse à l'entrée, placer l'élément d'interface d'utilisateur (UI) (110) à un emplacement d'affichage fixe et maintenir l'élément UI à l'emplacement d'affichage fixe indépendamment de l'emplacement de l'élément d'intérêt (92).

6. Machine mobile selon la revendication 1, l'élément d'intérêt étant une seconde machine mobile indépendante (92).

7. Machine mobile selon la revendication 1, l'élément d'intérêt étant une structure fixe stationnaire.

8. Machine mobile selon la revendication 1, le ou les dispositifs de calcul (52) étant, en outre, configurés de manière à :
en réponse à un changement de la position de la machine mobile (10), un changement de l'orientation de la machine mobile ou un changement de l'emplacement de l'élément d'intérêt (92), sélectionner un second emplacement d'affichage (88) à l'intérieur la cabine d'opérateur (14), le second emplacement d'affichage étant entre le siège (32) et l'emplacement de l'élément d'intérêt, et
présenter l'élément d'interface d'utilisateur (110) au niveau du second emplacement d'affichage (88).

9. Machine mobile selon la revendication 1, le ou les dispositifs de calcul (52) étant, en outre, configurés de manière à :
déterminer un emplacement de la tête d'un opérateur dans la cabine d'opérateur (14),
déterminer une ligne de vue à partir de la tête de l'opérateur vers l'emplacement de l'élément d'intérêt (92),
et sélectionner l'emplacement d'affichage (82) de telle sorte que l'emplacement d'affichage corresponde à la ligne de vue.

10. Machine mobile selon la revendication 9, le ou les dispositifs de calcul (52) étant configurés de manière à :
recevoir une entrée à partir d'un opérateur indiquant une préférence d'agencement d'interface utilisateur, la préférence indiquant si un élément d'interface d'utilisateur (110) est sur une ligne de vue de la tête de l'opérateur,
placer l'élément d'interface d'utilisateur (110) sur la ligne de vue si l'entrée indique que l'élément d'interface d'utilisateur est sur la ligne de vue, et
placer l'élément d'interface d'utilisateur (110) à l'extérieur de la ligne de vue si l'entrée indique que l'élément d'interface d'utilisateur est à l'extérieur de la ligne de vue.

11. Machine mobile selon la revendication 1, le ou les dispositifs de calcul (52) étant, en outre, configurés de manière à :
estimer un emplacement de la tête d'un opérateur dans la cabine d'opérateur (14),
déterminer une ligne de vue à partir de l'emplacement estimé de la tête de l'opérateur jusqu'à l'emplacement de l'élément d'intérêt (92), et
sélectionner l'emplacement d'affichage (82) de telle sorte que l'emplacement d'affichage corresponde à la ligne de vue.

12. Machine mobile selon la revendication 1, comprenant, en outre :
une passerelle de communications (68) afin de permettre des communications à distance avec les machines externes,
le ou les dispositifs de calcul (52) étant, en outre, configurés de manière à :
recevoir des informations à partir de l'élément d'intérêt (92) par l'intermédiaire de la passerelle de communications, et
présenter les informations en tant que partie de l'élément d'interface d'utilisateur (110).

13. Machine mobile selon la revendication 1, comprenant, en outre :
un capteur destiné à détecter une orientation d'un opérateur,
le ou les dispositifs de calcul (52) étant, en outre, configurés de manière à :
déterminer un premier champ visuel de l'opérateur en utilisant des données provenant du capteur,
positionner l'élément d'interface d'utilisateur (110) de telle sorte qu'il soit à l'intérieur du premier champ visuel,
déterminer un second champ visuel de l'opérateur en utilisant des données à partir du capteur, et
repositionner l'élément d'interface d'utilisateur (110) de telle sorte qu'il soit à l'intérieur du second champ visuel.

14. Machine mobile selon la revendication 1, comprenant, en outre, une passerelle de communications (68) afin de permettre des communications à distance, dans laquelle le ou les dispositifs de calcul (52) sont configurés de manière à :
déterminer un emplacement d'un premier élément d'intérêt (92) en utilisant des informations reçues par l'intermédiaire de la passerelle de communications,
sélectionner un premier d'une pluralité d'emplacements d'affichage (82) situé entre le siège (32) et l'emplacement du premier élément d'intérêt,
présenter un premier élément d'interface d'utilisateur (110) au niveau de l'emplacement sélectionné de la pluralité d'emplacements d'affichage, le premier élément d'interface d'utilisateur étant associé au premier élément d'intérêt, et
présenter un second élément d'interface d'utilisateur au niveau d'un second emplacement d'affichage, le second emplacement d'affichage étant agencé entre le siège et l'emplacement d'un second élément d'intérêt, le second élément d'intérêt étant une partie de la machine (10) mais externe à la cabine d'opérateur (14), le second élément d'interface d'utilisateur étant associé au second élément d'intérêt.

15. Machine mobile selon la revendication 14, comprenant, en outre :
un dispositif d'affichage tête haute (80) comportant une surface d'affichage tête haute sur chacun d'une pluralité de côtés (36, 40) de la cabine d'opérateur, et
le ou les dispositifs de calcul (52) étant configurés de manière à :
sélectionner le premier de la pluralité d'emplacements d'affichage (82) en sélectionnant une première surface d'affichage tête haute correspondant à un premier côté (40) de la cabine d'opérateur (14) entre le siège (32) et l'élément d'intérêt (92), et
présenter le second élément d'interface d'utilisateur sur une seconde surface d'affichage tête haute correspondant à un second côté (36) de la cabine d'opérateur (14) entre le siège et l'élément d'intérêt.

16. Machine mobile selon la revendication 14,
le premier élément d'intérêt étant un accessoire couplé à la machine mobile (10), et
le ou les dispositifs de calcul (52) étant configurés de manière à :
déterminer si l'accessoire est couplé à la machine mobile, et
présenter le second élément d'interface d'utilisateur uniquement lorsque l'accessoire est couplé à la machine mobile.

17. Machine mobile selon la revendication 1, comprenant, en outre, un dispositif d'affichage tête haute (80) comportant une pluralité de surfaces d'affichage (36, 40), le ou les dispositifs de calcul (52) étant configurés de manière à :
déterminer automatiquement un emplacement de chacun d'une pluralité d'objets externes à la cabine d'opérateur (14),
déterminer automatiquement une orientation de la machine mobile (10) par rapport aux objets externes,
en utilisant les emplacements des objets et l'orientation, déterminer automatiquement une position pour chacun d'une pluralité d'éléments d'interface d'utilisateur (110), chaque élément d'interface d'utilisateur étant associé à l'un des objets, la position de chaque élément d'interface d'utilisateur correspondant à l'une de la pluralité de surfaces d'affichage entre le siège d'opérateur et l'emplacement de l'objet associé à l'élément d'interface d'utilisateur, et
en présentant automatiquement la pluralité d'éléments d'interface d'utilisateur (110) sur l'affichage tête haute dans les positions déterminées.

18. Machine mobile selon la revendication 17, le ou les dispositifs de calcul (52) étant, en outre, configurés de manière à :
déterminer automatiquement un emplacement de la tête d'un opérateur dans la cabine d'opérateur (14), et
déterminer automatiquement la position pour chacun de la pluralité d'éléments d'interface d'utilisateur (110) de telle sorte que la position de chaque élément d'interface d'utilisateur corresponde à une ligne de vue entre la tête de l'opérateur et l'emplacement de l'objet associé à l'élément d'interface d'utilisateur.

19. Machine mobile selon la revendication 18, le ou les dispositifs de calcul (52) étant, en outre, configurés de manière à :
estimer automatiquement un emplacement de la tête d'un opérateur dans la cabine d'opérateur (14), et
déterminer automatiquement la position pour chacun de la pluralité d'éléments d'interface d'utilisateur (110) de telle sorte que la position de chaque élément d'interface d'utilisateur correspond à une ligne de vue entre la tête de l'opérateur et l'emplacement de l'objet associé à l'élément d'interface d'utilisateur.

20. Machine mobile selon la revendication 17, chacune des surfaces d'affichage (36, 40) correspondant à une fenêtre de la cabine d'opérateur (14).
